# EUROPÄISCHE PATENTSCHRIFT

(11) **EP 1 742 836 B1**
(45) Veröffentlichungstag und Bekanntmachung des Hinweises auf die Patenterteilung: **03.03.2010**
(21) Anmeldenummer: 05736181.8
(22) Anmeldetag: 19.04.2005
(51) Int. Cl.: B63H 9/06

(54) **SETZSYSTEM FÜR EIN AUSFLIEGENDES DRACHENARTIGES WINDANGRIFFSELEMENT BEI EINEM WASSERFAHRZEUG MIT WINDANTRIEB**
PLACEMENT SYSTEM FOR A FLYING KITE-TYPE WIND-ATTACKED ELEMENT IN A WIND-POWERED WATERCRAFT
SYSTEME DE MISE EN PLACE POUR ELEMENT VOLANT, DU TYPE CERF-VOLANT, SOUMIS A L'ACTION DU VENT, DANS UN BATEAU A PROPULSION PAR ENERGIE EOLIENNE

(30) Priorität: 19.04.2004 DE 102004018814
(43) Veröffentlichungstag der Anmeldung: 17.01.2007
(73) Patentinhaber: Skysails GmbH & Co. KG, 21079 Hamburg (DE)
(72) Erfinder: WRAGE, Stephan, 22767 Hamburg (DE); BÖHM, Johannes, 41564 Kaarst (DE)
(74) Vertreter: Glawe, Delfs, Moll
(86) Internationale Anmeldenummer: PCT/EP2005/004186
(87) Internationale Veröffentlichungsnummer: WO 2005/100150

(56) Entgegenhaltungen:
- GB-A- 2 098 950

## Beschreibung

Die Erfindung betrifft ein System zum Setzen eines frei ausfliegenden drachenartigen Windangriffselements bei einem Wasserfahrzeug mit Windantrieb.

Ein derartiges Setzsystem für ein frei ausfliegendes drachenartiges Windangriffselement ist aus der Druckschrift: Ship Propulsive Kites, An Initial Study, by J. F. Wellicome and S. Williams, University of Southampton, ISSN 0140 3818 SSSU19, Kapitel 4.1.2 "Non Powered Drouge Launch" bekannt.

Nachteilig bei diesem in der genannten Veröffentlichung nur skizzenhaft angedeuteten und nicht vollständig ausentwickelten Setzsystem ist, dass das Setzen des Windangriffselements mit einem Hilfsantrieb in Form eines zusätzlichen Fallschirms erfolgen muss. Außerdem sind keine Maßnahmen ersichtlich, welche es ermöglichen, ein größeres Windangriffselement auch wieder sicher zu bergen.

Das Dokument GB 2098950, das als nächstliegender Stand der Technik angesehen wird, beschreibt ein Setzsystem für ein ausfliegendes Windangriffelement.

Der Erfindung liegt die Aufgabe zugrunde, bei einem derartigen Setzsystem Maßnahmen vorzusehen, welche es ermöglichen, ein Windangriffssystem in einer für den praktischen Einsatz auf See tauglichen Weise zu starten und auch wieder sicher zu bergen. Dabei soll insbesondere auch dafür Sorge getragen sein, dass das Windangriffselement in gesetztem Zustand von Deck geführt werden kann, so dass die Krängung des Wasserfahrzeugs minimiert ist.

Diese Aufgabe wird mit den im kennzeichnenden Teil des Anspruchs 1 angegebenen Maßnahmen gelöst. Die Erfindung beruht dabei auf der Erkenntnis, dass auch zum Bergen das Windangriffselement in eine Position geführt werden, in der es sicher und unproblematisch geborgen werden kann.

Hierbei ist es besonders vorteilhaft, wenn eine azimutal schwenkbare Halterung vorgesehen ist, mittels der das Windangriffselement einerseits zum Setzen in eine Position bringbar ist, in der es einer ausreichenden Windeinwirkung ausgesetzt ist. Eine Andockaufnahmevorrichtung zur lösbaren Verbindung mit dem Andockadapter des Windangriffselements ist dabei jeweils zu der dem Wind abgewandten Seite gerichtet, wobei sowohl angetriebene Nachführmittel als auch eine Art "Windfahne" vorgesehen sein kann. Die Andockaufnahmevorrichtung ist dabei so ausgestaltet, dass sie durch selbsttätig eingreifende Haltemittel auch ein Arretieren zum Bergen des Windangriffselements ermöglicht.

Besonders vorteilhaft bei der Erfindung ist weiterhin der Umstand, dass der Start des Windangriffselements allein durch Windeinwirkung erfolgen kann.

Es ist weiterhin günstig, wenn sich die Startposition in horizontaler und/oder vertikaler Richtung gegenüber dem Ort der letzten Seilführung in gesetztem Zustand des Windangriffselements versetzt angeordnet ist. Letzterer wird meist durch die Winsch gebildet oder befindet sich in der Nähe der Winsch. Auf diese Weise kann das Windangriffselement im Betriebszustand unabhängig von der Startvorrichtung betrieben werden.

Eine andere vorteilhafte Weiterbildung der Erfindung ist dabei derart ausgestaltet, dass bei dem frei ausfliegendes drachenartigen Windangriffselement ein sich in eine Anzahl von Halteseilen auffächerndes Zugseil mit dem Fahrzeug verbunden ist, wobei ein den Auffächerungspunkt überbrückendes Verbindungsseil vorgesehen ist, welches von der Andockeinrichtung am Windangriffselement zu einem - vom Windangriffselement aus gesehen - jenseits des Auffächerungspunktes gelegenen - Verbindungspunkt zum Hauptteil des Zugseils geführt ist, und dass eine Sorgleine vorgesehen ist, welche von der Andockaufnahmevorrichtung ausgeht und deren freies Ende mindestens im Bereich des Verbindungsseils auf dem Zugseil kraftschlüssig verschieblich geführt ist. Auf diese Weise ist der Auffächerungspunkt des Zugseils, in dessen Nähe sich auch die Steuerelemente für die aerodynamische Einstellung des Windangriffselements im Betrieb befinden können, während des Bergevorgangs überbrückt, so dass es sicher an die Andockvorrichtung herangezogen werden kann. Die Sorgleine kann dabei bevorzugt auch durch ein Fall oder dergl. gebildet werden, wenn das Windangriffselement auf einem Sportboot zum Einsatz kommt.

Bei einer vorteilhaften Weiterbildung der Erfindung ist eine zusätzliche Sorgleine mit dem Zugseil über eine Seilweiche verbunden, welche Mittel aufweist, um eine als Seilrutscher ausgebildete Führungsvorrichtung, die mit dem Ende der Sorgleine verbunden ist, von ihrer Position auf dem Zugseil beim Bergen des Windangriffselements auf die Sorgleine zu überführen, während das Windangriffselement über einen weiteren Leinenteil mit der Seilweiche verbunden ist. Vorzugsweise weist dabei die Seilweiche ein im wesentlichen T-förmiges Profil auf, welches von der Führungsvorrichtung Ω-förmig umgriffen wird. Auf diese Weise wird das Ergreifen und Bergen des Windangriffselements erleichtert.

Wenn die azimutal rotierbare Andockaufnahme eine Vorrichtung aufweist, welche die aktive Richtung der Aufnahme jeweils selbsttätig nach Lee stellt, lässt sich ein automatisierter Bergevorgang realisieren, so dass auch bei einer möglichen Fehlfunktion des Steuerteils oder eines angeschlossenen, für die Bedienung des Windangriffselements wichtigen Geräts selbsttätig das sichere Bergen des Windangriffselements auslösbar ist. Bei der Verwendung einer Sorgleine kann sich die Aufnahmevorrichtung auch dadurch selbsttätig nach Lee stellen, indem eine Umlenkrolle für die Sorgleine exzentrisch mit der Aufnahmevorrichtung verbunden ist, so dass das unter Winddruck stehende Windangriffselement die Aufnahmevorrichtung selbsttätig nach Lee zieht.

Bei einer vorteilhaften Weiterbildung der Erfindung ist die Andockaufnahme und das Windangriffelement so gestaltet, dass von dem Windangriffselement im angedockten Zustand eine minimale Last auf das System ausgeübt wird. Dies wird beispielsweise erreicht, wenn das Windangriffelement an der Andockaufnahme in seinem aerodynamischen Gleichgewichtspunkt geführt wird. Ist dies der Fall, so erzeugt das vom Wind angeströmte Windangriffselement genau den Auftrieb, der benötigt wird um seine Gewichtskraft zu neutralisieren. Damit "schwebt" das Windangriffselement an der Andockaufnahme. Diese muss dann nur noch die horizontal am Windangriffelement wirkenden Widerstandkräfte aufnehmen, die aber relativ gering sind, da das Windangriffelement mit seiner schmalen Vorderseite angedockt ist. Es ist leicht ersichtlich, dass ein derart gestaltetes System erhebliche Vorteile für die Dimensionierung mit sich bringt.

Bei einer anderen bevorzugten Weiterbildung weist das Windangriffselement eine Reffeineinrichtung auf, wobei dann das Setzen- und/oder das Bergen des insoweit flexibel ausgebildeten Windangriffselements in einem gerefften Zustand erfolgt. Dabei ist es aus Stabilitätsgründen gegebenenfalls günstig, wenn das Windangriffselement einen feststehenden, nicht reffbaren Mittelteil aufweist.

Das Reffen gestaltet sich vorteilhaft, wenn der Reffmechanismus in Richtung des Reffvorgangs gerichtete Zugbänder aufweist, die vorzugsweise mit einer innerhalb des Windangriffselements vorgesehenen Winsch betätigbar sind, wobei das Reffen bevorzugt in seitlicher Verlängerung des Tragflügelprofils erfolgt. Die beim Reffen entstehenden Falten werden vorteilhaft zwischen Bereichen mit festem Profilquerschnitt eingeschlagen, wobei ein gleicher Profilquerschnitt im Wesentlichen über die gesamte Tragflügellänge vorgesehen ist.

Bei einer vorteilhaften Weiterbildung der Erfindung ist das Windangriffelements so gestaltet, dass es über seine Breite eine geringe Krümmung aufweist. Damit lässt sich das Windangriffselement leichter reffen, da die Reibungskräfte der Reffbänder im Element reduziert werden. Weiterhin vorteilhaft ist bei dieser Weiterbildung, dass das gereffte Windangriffelement eine geringere Höhe aufweist, als ein gerefftes Windangriffselement mit großer Krümmung. Die Flugeigenschaften sind jedoch bei einer geringeren Höhe wesentlich verbessert, so dass das Steuern des Elements erleichtert ist.

Günstigerweise ist zur Stabilitätserhöhung mindestes ein aufblasbares Element im Bereich der Flügelvorderkante und/oder zwischen den Bereichen mit festem Flügelquerschnitt vorgesehen, welches auch zum Unterstützen des Entreffens dient.

Bei einer bevorzugten Weiterbildung der Erfindung bildet die erhöhte Position das obere Ende eines insbesondere teleskopierbaren Krans, bei dem vorzugsweise Hydraulikzylinder mit benachbarten oder aufeinander folgenden Teleskopsegmenten zum Antrieb verbunden sind.

Günstigerweise weist der mobile Kran im Bereich der azimutal schwenkbaren Aufnahme ein aerodynamisch verkleidetes Anschlusselement auf, welches eine Zuführung und ein Anschlusselement für Druckluft aufweist, das mit dem aufblasbaren Körper des Windangriffselements verbindbar ist.

Bei einer vorteilhaften Weiterbildung der Erfindung ist entweder am Kranfuß oder in der Andockaufnahme des Systems ein starkes Gebläse vorgesehen, das sich auch für den Saugbetrieb eignet. In der Mitte der Vorderkante des Windangriffelements befindet sich bei dieser Weiterbildung eine Öffnung mit relativ großem Querschnitt, die im angedockten Zustand derart schlüssig mit der Andockaufnahme verbunden ist, dass durch das Gebläse das Windangriffselement schnell be- oder entlüftet werden kann. Es ist leicht ersichtlich, dass durch diese Vorrichtung der Setz- und Bergevorgang beschleunigt werden kann.

Weiterhin vorteilhaft ist es, wenn ein Reffvorgang bei frei fliegendem Windangriffselement über eine Fernbetätigung oder durch das Ausgangssignal mindestens eines Sensorelements auslösbar ist, wobei bei einem ein aufblasbares Element aufweisenden Windangriffselement auch der Entlüftungsvorgang auslösbar ist.

Ein Notreffvorgang wird dabei bevorzugt durch schnelles Öffnen eines das aufblasbare Element abschließenden Verschlussbereichs ausgelöst, insbesondere zusammen mit einem schnellen Einziehen des Zugseils des Windangriffselements.

Um die Bergungskräfte klein zu halten erfolgt das Einfangen des Windangriffselements über eine Befestigung, welcher in einem Punkt angeordnet ist, für den sich symmetrisch wirkende Windkräfte in horizontaler und vertikaler Richtung kompensieren.

Die dargestellte Erfindung eignet sich insbesondere für seegehende Schiffe oder solche mit Fahrgebieten im Bereich großer Seen.

Weitere günstige Ausführungsbeispiele ergeben sich aus den Unteransprüchen.

Ein vorteilhaftes Ausführungsbeispiel ist in den Figuren dargestellt. Es zeigen:
Fig. 1 ein von dem erfindungsgemäßen Drachen-System gezogenes Schiff in schräger Draufsicht,
Fig. 1a ein Koordinatensystem, welches bei der nachfolgenden Beschreibung als Bezugssystem dient,
Fig. 1b ein Ausführungsbeispiel des erfindungsgemäßen Windangriffselements in Form eines Gleitschirms gemäß der Erfindung.
Fig. 2 ein Prinzipschaltbild der Steuerung des erfindungsgemäßen Windangriffselements in schematischer Darstellung,
Fig. 3 ein Blockschaltbild der Steuerung des erfindungsgemäßen Windantriebssystems als Blockschaltbild in detaillierter Darstellung,
Fig. 4 eine Andockvorrichtung für das Windangriffselement in perspektivischer Darstellung,
Fig. 4a ein Detail der Andockvorrichtung gemäß Fig. 4 in perspektivischer Darstellung,
Fig. 4b ein weiteres Detail der Andockvorrichtung gemäß Fig. 4 in perspektivischer Darstellung,
Fig. 4c eine Reffeinrichtung des Windangriffselements in schematischer Darstellung,
Fig. 5a eine Blockdarstellung eines Setzvorgangs gemäß der Erfindung,
Fig. 5b eine Blockdarstellung eines Bergevorgangs gemäß der Erfindung,
Fig. 6a eine schematische Darstellung des Ablaufs eines Setzvorgangs gemäß der Erfindung,
Fig. 6b eine schematische Darstellung des Ablaufs eines Bergevorgangs gemäß der Erfindung sowie
Fig. 7 die Wiedergabe eines beschleunigten Bergevorgangs gemäß der Erfindung.

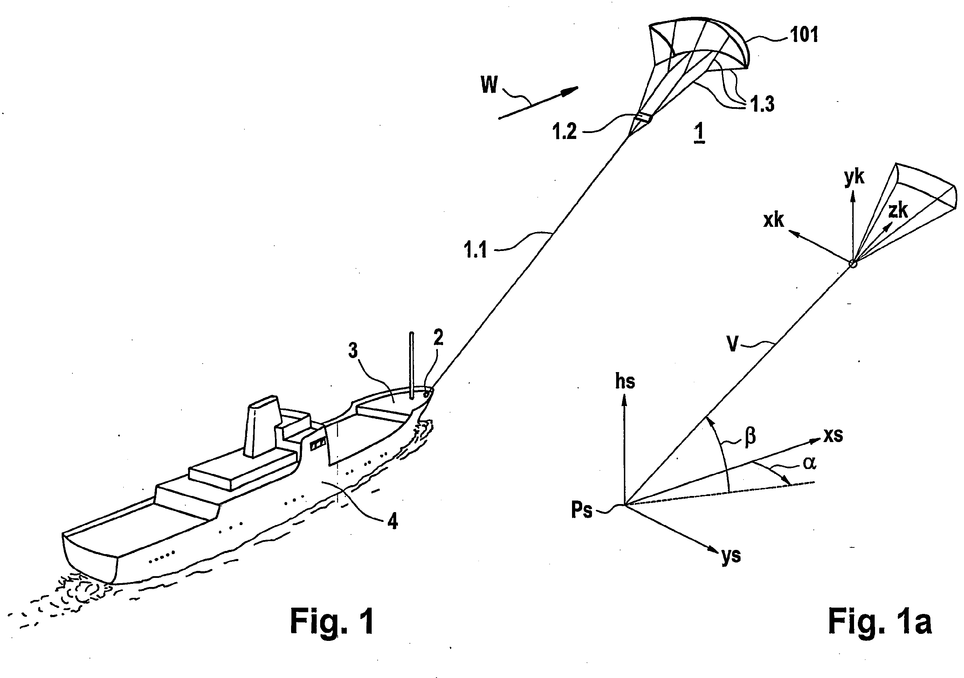

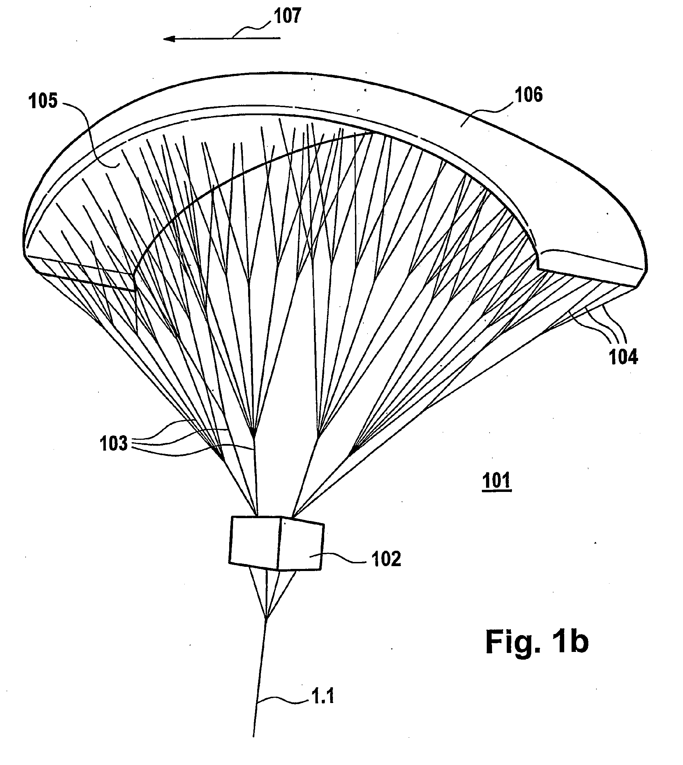

In Fig. 1 ist in den schräger Draufsicht ein von dem erfindungsgemäßen Drachensystem gezogenes Schiff wiedergegeben. Dabei ist ein Windangriffselement 1 über einen Zugseil 1.1 mit einer Kraftangriffsvorrichtung 2, die im Bugbereich eines Schiffes 4 vorgesehen ist, mit letzterem verbunden. Das Zugseil 1.1 ist zu einer zentralen Gondel 1.2 geführt, von der aus eine Anzahl von Halteleinen 1.3 ausgeht, welche zu dem nach Art eines Gleitschirms mit Drachenprofil ausgestalteten Windangriffselement 1 geführt sind und diesem die notwendige Form geben. Zu den Einzelheiten hierzu wird auf die Beschreibung weiter unten verwiesen. Die scheinbare Windrichtung im Bereich des Windangriffelements 1 ist mit W bezeichnet. Der entsprechende Windvektor ist durch seine Größe und Richtung gekennzeichnet. Gegebenenfalls wird seine zeitliche Veränderung noch durch eine die Böigkeit kennzeichnende Größe B gekennzeichnet, die zeitlich mittlere Abweichung der Windgeschwindigkeit vom mittleren Wert bildet und als Skalar darstellbar ist, der quasi den Radius einer Kugel um die Spitze des Windvektors W bildet.

In Fig. 1a ist ein Koordinatensystem wiedergegeben, welches bei der nachfolgenden Beschreibung als Bezugssystem herangezogen wird. Dabei gibt xₛ die Fahrtrichtung des Schiffes an, und yₛ ist die Richtung quer zur Fahrtrichtung. Das Koordinatensystem ist dabei fest mit einem Punkt Pₛ des Schiffes verbunden zu denken. Bei diesem Punkt handelt es sich bevorzugt um den Kraftangriffspunkt 2 im Bugbereich. Die Höhe hₛ entspricht dabei der Richtung der Achse z des konventionellen Koordinatensystems. Sie gibt die Höhe über dem Bezugspunkt Pₛ an. Dieser Bezugspunkt ist in bevorzugter Weise der Ort der Anbringung der GPS-Antenne eines Bord eigenen GPS-Gerätes, so dass die Koordinaten eines Punktes außerhalb von Pₛ, bei dem sich ein anderes GPS-Gerät befindet, durch Differenzbildung der von beiden Geräten ausgegebenen Koordinaten erzeugt werden können. (Sollte sich die GPS-Antenne das Bord eigenen GPS-Gerätes entfernt vom Bezugspunkt Pₛ befinden, so kann dies durch Hinzufügen einer festen Koordinatendifferenz berücksichtigt werden.)

Zur Vereinfachung soll nachfolgend von einem Polarkoordinatensystem ausgegangen werden, bei dem der Winkel α den Azimutwinkel und der Winkel β den Höhenwinkel bildet. Die Richtung des Vektors V zeigt dabei also auf die Gondel 1.2 des Windangriffselements 1. Es handelt sich hierbei gleichsam um ein "geographisches Koordinatensystem", da die Gondel 1.2 bzw. das Windangriffselement 1 sich im Wesentlichen auf der Oberfläche einer Kugel bewegen. Der Azimutwinkel α und Höhenwinkel β geben damit so etwas wie die geographische Länge und Breite der Position der Gondel auf der durch den Vektor V aufgespannten "Weltkugel". Die Länge des Vektors V gibt grob die Länge des Zugseils 1.1 an, wobei dessen Durchhang zunächst außer Betracht bleiben soll.

Die Gondel 1.2 des Windangriffselements ist nach einem eigenen Koordinatensystem mit den Richtungen xₖ, yₖ und zₖ ausgerichtet, wobei zₖ in die Richtung der Verlängerung des Vektors V weist. Die Drehung der Gondel 1.2 des Windangriffselements 1 um die Hochachse zₖ wird mit dem Gierwinkel (Yaw) bezeichnet. Durch eine Veränderung des Gierwinkels wird eine Änderung der Flugrichtung des Windangriffselements 1 bewirkt. Der Gierwinkel kann u. a. durch die aktive Ansteuerung von (weiter unten beschriebenen) Bremsklappen des das Windangriffselement 1 bildenden Gleitschirms verändert werden. Er bewirkt eine Richtungsänderung, und dieser Vorgang ist mit dem Lenken eines Lenkdrachens vergleichbar. Eine Drehung um die Längsachse xₖ stellt eine Rollbewegung (Roll) dar und wird nicht aktiv gesteuert. Aus der Rollbewegung bzw. der entsprechenden Abweichung der Richtung von zₖ von V lässt sich der Durchhang des Zugseils 1.1 auf Grund der Schwerkraft ermitteln, während die Drehung um die Querachse yₖ die Neigung (Pitch) des Windangriffselements um die Querachse bildet und durch Böen und deren Einwirkung auf das Zugseil 1.1 hervorgerufen sein kann. Dieses Bezugssystem bildet die Basis für das Verständnis der Beschreibung des weiter unten beschriebenen Schiff-Drachen-Systems.

In Fig. 1b ist ein Ausführungsbeispiel eines erfindungsgemäßen Windangriffselements schematisch dargestellt. Das Windangriffselement bildet bei der dargestellten Ausführungsform einen Gleitschirm 101 mit einem Behältnis 102 für die Steuerung, wie es weiter unten näher beschrieben werden wird. Von dem an dem Zugseil 1.1 befestigten Behältnis 102 gehen Halteleinen 103 aus, welche in Verzweigungen 104 in Form eines Leinenbaums übergehen, die mit einer unteren textilen Deckschicht 105 verbunden sind. Eine obere textile Deckschicht 106 bildet den Abschluss nach oben. Die beiden Deckschichten sind durch interne - in der Figur nicht sichtbare - Verbindungsleinen oder entsprechende Verbindungselemente, wie zum Beispiel Textilrippen, zusammengehalten, wobei das durch die beiden Deckschichten gebildete Tragflügelprofil durch einen internen Luftüberdruck stabilisiert wird, der sich über Öffnungen an der Drachenvorderkante (in der Zeichnung links) aufbaut, welche in der Zeichnung aus Gründen der Übersichtlichkeit ebenfalls fortgelassen sind. Die Flugrichtung ist mit dem Pfeil 107 gekennzeichnet.

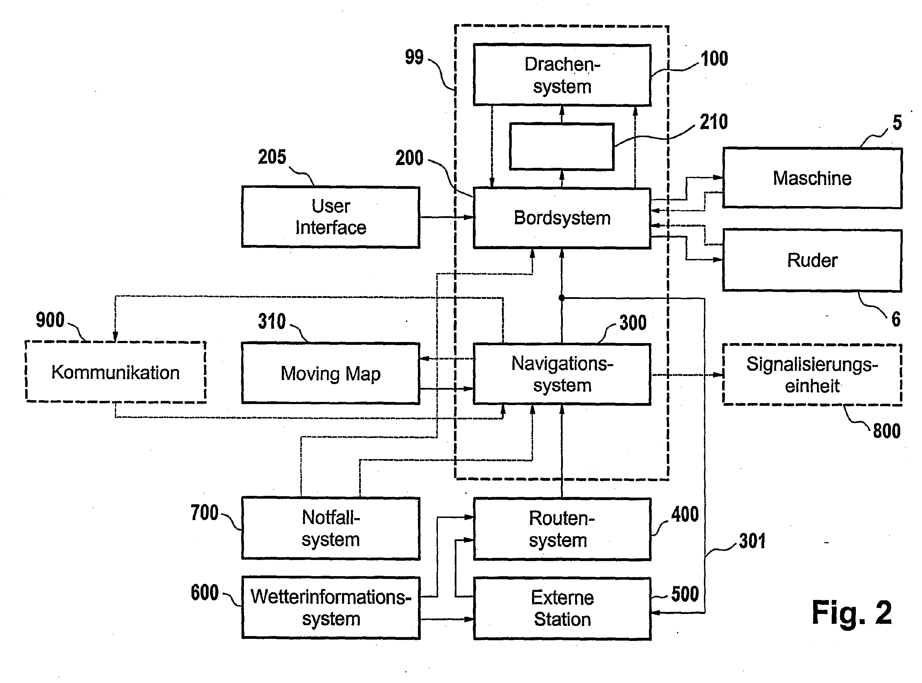

In Fig. 2 ist eine Prinzipdarstellung des erfindungsgemäßen Windantriebssystems als Blockschaltbild wiedergegeben. Das Bild dient auch zur Orientierung bei der nachfolgenden Beschreibung der einzelnen Systembestandteile. Die in der Übersichtsdarstellung verwendeten 100-ter-Bezugszeichen bilden auch die Gruppenbezeichnung der weiter unten jeweils detailliert dargestellten Systemteile. (Eine gestrichelte Linie 99 umgrenzt dabei diejenigen Baugruppen, welche mindestens einem konventionellen Schiff hinzugefügt werden müssen, damit es mit dem erfindungsgemäßen Windantrieb zusätzlich ausgestattet ist.) Das Windangriffssystem 100 umfasst das Windangriffselement sowie das dazugehörige Steuersystem, so weit es unmittelbar bei diesen angeordnet ist. Die Anordnung kann dabei sowohl in einer am Ende des Zugseils befindlichen Gondel, von der die Halteleinen ausgehen, angeordnet sein oder aber auch unmittelbar in das Windangriffselement eingearbeitet sein. Das Steuersystem umfasst im Wesentlichen einen Autopiloten, der die Lage- und Flugbahnsteuerung des Windangriffselements kontrolliert.

Das Windangriffssystem 100 ist über das Zugseil und eine Winsch 210 (einschließlich Zugseil) und gestrichelt dargestellte Kommunikationswege mit dem Bordsystem 200 verbunden mit einer Bedienoberfläche (User Interface) 205, welches ein Steuersystem umfasst, das sowohl die Drachenposition kontrolliert als auch an die Maschine 5 und das Ruder 6 des Schiffes die notwendigen Steuerbefehle abgibt. Mit dem Windangriffselement ist das Bordsystem über verschiedene Kommunikationswege verbunden, welche ermöglichen, sowohl die Drachenposition vom Bordsystem im Grundsatz vorzugeben als auch vom Windangriffssystem her Informationen zu empfangen, die für das Bordsystem von Bedeutung sind.

Dem Bordsystem 200 vorgeschaltet ist ein Navigationssystem 300, welches an das Bordsystem die einzuhaltenden Route des Schiffes unter Berücksichtigung von Kosten, Zeiten, Geschwindigkeit und Windausnutzung sowie gegebenenfalls die Windrichtung und Windstärke übermittelt. Zur Windinformationen kann auch eine Kennzeichnung gehören, welche die Böigkeit des Windes charakterisiert. Dazu können ferner durch noch Informationen betreffend den Seegang bzw. die daraus resultierende Schiffsbewegung kommen. (Die Wind- und Wetterdaten stammen dabei ursprünglich aus dem weiter unten dargestellten Wetterinformationssystem 600.) Das Navigationssystem wird unterstützt von dem navigatörischen Informationsfundus (Moving Map) 310.

Aus den Kurs-, Wind- und Welleninformationen werden Signale generiert, welche das Bordsystem 200 ansteuern und eine entsprechende Einstellung des Drachensystems 100 bewirken. Das Bordsystem 200 erzeugt weiterhin Ansteuersignale für die Maschine 5 und das Ruder 6.

Das Navigationssystem 300 wird von einem Routensystem 400 angesteuert, welches den Weg des Schiffes über die dem Schiffsbetrieb zu Grunde liegenden ökonomischen Basis ermittelt. Das Routensystem 400 wird auf der Basis von einer externen Station 500 vorgegebenen Daten angesteuert, welche mit den Daten eines Wetterinformationssystems 600 abgeglichen werden. Die von dem Navigationssystem 300 aktuell ermittelten Kursdaten werden über eine Rückkopplungsverbindung 301 (über Funk, Satellit) an die externe Station 500 zurückgemeldet. Die Daten sind auch von anderen mit dem erfindungsgemäßen System ausgestatten Schiffen empfangbar und können zur lokalen Aktualisierung des Wettersystems verwendet werden. Auf diese Weise können aktuelle, lokal bedingte Kursänderungen bei der weiteren externen Routenvorgabe wie berücksichtigt werden.

Es ist ersichtlich, dass die Positionierung des Drachensystems 100 in Abhängigkeit von den Kursdaten so erfolgt, dass sowohl auf Grund der Wetterbedingungen (aktuell vorherrschenden Winde und Seegangsbedingungen) als auch unter Berücksichtigung der ökonomischen Grenzbedingungen, welche einen möglichst Kosten sparenden Schiffsbetrieb erbringen sollen, eine optimale Routenvorgabe erfolgt.

Ein Notfallsystem 700 gibt im Falle eines unvorhergesehenen Ereignisses, welches ein sofortiges Handeln in Form eines Notmanövers erzwingt, die erforderlichen Steuerbefehle.

In weiteren Blöcken 800 bzw. 900 sind jeweils das Signalisierungssystem und Kommunikationssystem zusammengefasst, welches die Navigation mit weiteren Verkehrsteilnehmern abstimmt. Zum Signalisierungssystem gehört eine Navigationssicherheitsbeleuchtung sowie die Aussendung von eigenen Navigationsdaten über Funk, welche andere in der Umgebung befindliche Schiffe über das gesetzte Windangriffssystem und die beabsichtigte Route bzw. den aktuellen Kurs informieren. Das Kommunikationssystem umfasst dagegen alle Systeme, welche den weiteren Informationsaustausch betreffen.

Die Hauptwege des Datenflusses sind in Fig. 2 als durchgezogene Linien dargestellt, während die übrigen Nachrichtenwege gestrichelt wiedergegeben sind.

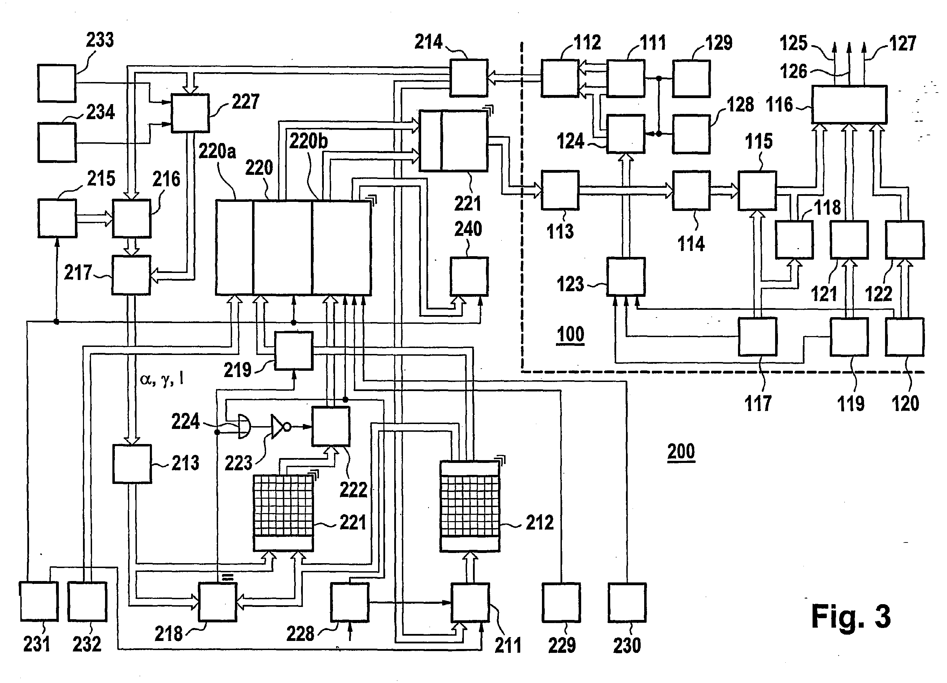

In Fig. 3 sind der Block 100, welcher das Windangriffssystem umfasst, sowie der Block 200 mit dem Bordsystem aus Fig. 2 näher dargestellt. Es wird hier die Positionierung und Steuerung des Drachens 101 beschrieben. Die Windrichtungs- und Windgeschwindigkeitsinformation, einschließlich Böigkeitskennwert sowie Seegangsinformationen gelangt in einen Zwischenspeicher 211, in dem diese Daten zur Pufferung festgehalten werden. Da sich die Windrichtung und alle Einstellungen des Drachens auf den scheinbaren Wind beziehen, ist die Kursinformation bei der Verarbeitung entbehrlich. Die Einstellung und das Manövrieren des Windangriffselements in Bezug auf das Schiff erfordert keine Kenntnis des aktuellen Kurses, da sich alle Manöver in Bezug auf das Schiff und unter Einwirkung des auf den Drachen einwirkenden scheinbaren Winds beziehen. Die Windinformationen stammen beim Setzen des Drachen 101 zunächst aus dem Wetterinformationssystem 600 in Figur 2, wenn es darum geht, den Drachen zu positionieren. Sobald dessen eigene Windmessung nach dem Start jedoch in Funktion ist, wird der scheinbare Wind am Ort des Windangriffselements selbst bestimmt, da dieser für die Positionierung bestimmend ist.

Die Wind- und Seegangsdaten bilden insgesamt einen Datensatz, welcher einen eine Nachschlagetabelle bildenden Speicher 212 für die Sollposition und den Manövertyp des Windangriffselements adressiert. Diese Nachschlagetabelle ist wie ein normaler adressierbarer Speicher organisiert, wobei die Ausgangsdaten des Zwischenspeichers 211 als Adressen-Signale die einzelnen Speicherplätze adressieren, bei denen die zu den adressierten Daten gehörigen Zustandsdaten des Windangriffselements abgelegt sind. Eine derartige "Nachschlagetabelle" verknüpft nach Art eines "Nur-Lese-Speichers" (ROM) gemäß einem vorgegebenen funktionalen Zusammenhang die Eingangs- und Ausgangsdaten miteinander, lässt sich also als mathematische Zuordnung (Funktion) verstehen. Die entsprechenden Blöcke bilden jedoch nur eine beispielhafte Realisierung und können auch durch beliebige andere Funktionsglieder oder Baugruppen ersetzt werden. Hierbei kann es sich beispielsweise um einen Mikroprozessor handeln, bei dem die Steuerungssoftware in einem entsprechenden Speicher festgehalten ist oder aber auch um eine elektrische Schaltung, bei der der funktionale Zusammenhang nach Art eines Analogrechners durch die beteiligten elektrischen Komponenten festgelegt ist. Die Darstellung als Nachschlagetabelle ist hier der Übersichtlichkeit halber gewählt, weil eine Lösung mit einem Mikroprozessor beispielsweise nur deswegen unübersichtlicher darzustellen ist, weil die verschiedenen nacheinander abzuwickelnden Programmschritte aufwendige Überlegungen dahingehend erfordern, welche Programmteile dem Mikroprozessor nacheinander zuzuführen sind.

Bei der gewählten Ausführung können die Steuersignale parallel verarbeitet werden, wobei allerdings solche Schaltglieder, die eine Aktivierung der dargestellten Blöcke zu bestimmten Zeiten und die entsprechenden Regelungen bewirken, nicht dargestellt sind. Es wird der Einfachheit halber davon ausgegangen, dass ein eingehendes Steuersignal, welches von bisher anstehenden Signalzustand abweicht, die Verarbeitung in den nachfolgenden Blöcken auslöst, welche den betreffenden erreichten Zustand beibehalten, bis eine Signaländerung eine neue Verarbeitung erzwingt.

Die Zustandsdaten beinhalten also zum einen die Sollposition des Windangriffselements, d. h. seine Richtung in Bezug auf das Schiff und die auszubringende Länge des Zugseils. Darüber hinaus enthalten sie gegebenenfalls auch eine Informationen darüber, ob und wenn ja nach welchem abgespeicherten Programm der Drachen 101 manövriert werden soll. Während der Drachen in einigen Positionen statisch, d. h. feststehend geführt wird, ist es für den Schiffsbetrieb in bestimmten Fällen günstiger, wenn der Drachen dynamisch geführt wird, d. h. vorbestimmte Flugfiguren ausgeführt werden, da sich dadurch seine Relativgeschwindigkeit zum Wind und infolgedessen auch seine Zugleistung erhöht. In einem weiteren Speicher 213 wird die aktuelle Position des Drachens festgehalten, wie sie durch das Navigationssystem des Drachens 101 bestimmt wird.

Die im Speicher 213 festgehaltene Ist-Position des Drachens bezieht sich auf das Schiff und wird vorzugsweise durch Differenzbildung zweier GPS-Signale ermittelt. Hierbei handelt es sich zum einen um den GPS-Empfänger 124 des Drachens 101 innerhalb des Drachensystems 100, welches mit dem fliegenden Drachen 101 verbunden ist. Die in der Flugposition des Drachens 101 ermittelten Positionsdaten werden mittels eines Senders 112 an einen Empfänger 214 übermittelt, welcher sich an Bord des Schiffes befindet. Ein weiterer GPS-Empfänger 215 ist ebenfalls an Bord des Schiffes vorgesehen. Sein Ausgangssignal wird zusammen mit dem Ausgangssignal des Empfängers 214 einer Subtrahiereinheit 216 zugeführt, mit der das Differential-GPS-Signal erzeugt wird. In einem der Subtrahiereinheit 216 nachgeschalteten Block 217 werden die Differenz-Positionsdaten in Polarkoordinaten umgerechnet, welche sich auf den Abstand zwischen der Winsch 2 und in die Position des Windangriffselements beziehen. Es handelt sich um die Winkel α und β entsprechend Fig. 1a sowie die Seillänge "L". Die so erhaltenen Differential-GPS-Positionsdaten weisen eine große Genauigkeit auf, wenn sie gleichzeitig ermittelt werden und der GPS-Empfänger des Schiffes an einem Ort installiert ist, der möglichst wenig von Schiffsbewegungen betroffen ist bzw. wenn die Bewegungen kompensiert werden.

Weiterhin ist es dabei notwendig, die Koordinatendifferenz zwischen der Positionen der Winsch und des GPS-Empfänger des Schiffes durch Subtraktion eines festen Wertes zu berücksichtigen. Die durch den so gebildeten Differential-GPS-Empfänger ermittelte Position wird in Zeitabständen ermittelt. Falls sie in ihrer Präzision nicht ausreicht, kann sie durch Werte, die über Beschleunigungsaufnehmer 117, 119 und 120 ermittelt werden, gestützt werden. Die entsprechenden Berechnungen, die eine Integration enthalten, wird in der Baugruppe 123 ausgeführt. Da es sich innerhalb der Zeitintervalle, in denen integriert werden muss, lediglich um die Zeiten handelt, die bis zum nächsten GPS-Positions-Signal vergehen, brauchen die Integratoren keine Qualitätsanforderungen zu erfüllen, die eine Stabilität über lange Zeiträume garantieren würde. (Die Beschleunigungsaufnehmer dienen an sich zur Stabilisierung der Flugmanöver, wie es weiter unten beschrieben ist - erhalten somit also eine Zweitfunktion). Des weiteren sind noch ein Höhenmesser 129, vorzugsweise als Luftdruckmesser ausgeführt, und ein Erdmagnetfeldsensor 128 vorgesehen, deren Daten ebenfalls dem Speicher für das Navigationssignal 124 zugeführt werden.

Eine weitere Möglichkeit zur Ermittlung der Ist-Position des Windangriffselements in Relation zum Schiff ist die Nutzung der zum Schiff übertragenen Daten des Höhenmessers 129 und des Erdmagnetfeldsensors 128. Diese Daten werden auf dem Schiff in Block 227 übertragen und festgehalten. In Block 227 findet dann eine Differenzbildung mit den Daten des Höhenmessers 233 am Schiff und des Erdmagnetfeldsensors 234 am Schiff statt. Handelt es sich bei dem Höhenmesser 129 um einen Luftdruckmesser können für die Bestimmung des Luftdrucks am Schiff aber auch Wetterdaten aus Block 600 (Isobaren) genutzt werden. Die so ermittelten Positioninformationen werden Block 217 zugeführt und gegebenenfalls mit den GPS-Daten abgeglichen. Auf diese Weise stützen sich die Positionsinformationen zweier unabhängiger Systeme gegenseitig und bei Ausfall eines Systems stehen die benötigten Daten weiterhin zur Verfügung.

Die aus dem Speicher 212 ausgelesene Sollposition des Drachen wird nun einerseits einem Vergleicher 218 zugeführt, der ein Signal ausgibt, wenn die Ist-Position des Windangriffssystems 100, die in dem Speicher 213 vorhanden ist, mit der aus dem Speicher 212 ausgelesenen Sollposition übereinstimmt. In diesem Fall wird über eine Freigabeschaltung 219 ein den ausgewählten Manövertyp kennzeichnender Datensatz aus dem Manövertyp-Speicher 220 ausgelesen. (Dabei kann ein statischer Flugzustand sich aber auch dadurch auszeichnen, dass der Drachen keine Manöver ausführt, sondern seine Flugposition beibehält. Hierbei handelt es sich um den Manövertyp "Null".)

Bei Ansteuerung dieses Manövertypspeichers 220 wird also ein Flugprogramm vom sequenziellen Typ ausgelesen und an den Autopiloten des Windangriffssystems 100 übertragen. Das Ausgangssignal des Speichers 220 gelangt dabei an einen Sender 221, der die Daten emittiert und einem Empfänger 113 des Windangriffssystems 100 zuführt. Vom Ausgang des Empfängers 113 gelangt das Signal in eine Autopiloten-Baugruppe und dort in eine Manöversteuereinheit 114. Diese empfängt die für ein bestimmtes sequenzielles Flugmanöver kennzeichnenden Signale und setzt diese in Kurvenwerte um, die dem Flugprozessor 116 zugeleitet werden, welcher das betreffende Flugmanöver ausführt. Dabei wird der einzustellende Wert in einen Kurvenwertvergleicher 115 überführt, dem andererseits das Eingangssignal des Gierwertmessers 117 zugeführt wird. Der Flugprozessor 116 erzeugt jetzt an seinem betreffenden Ausgang 125 über ein entsprechendes Antriebselement am Drachen 101 durch unsymmetrisches Abbremsen des Drachens 101 oder einer entsprechenden aerodynamischen Verformung Kurvenflug in der vorgegebenen Folge und Dauer. Die anderen aerodynamischen Effekte, welche durch die beiden anderen Ausgänge, des Flugprozessors 116 angesteuerte werden sind das Anstellen des Flügels und das Reffen, wie es weiter unten beschrieben wird.

Aus dem Speicher 220b für die Positionierung wird auch die Winsch 240 zum Fieren auf eine bestimmte Seil-Solllänge angesteuert.

Um ein Pendeln um die Hochachse zu vermeiden, wird zusätzlich ein durch einen Hochpass gefiltertes Signal dem Flugprozessor 116 mit versetzter Phasenlage dem Steuersignal überlagert zugeführt, so dass ein Aufschwingen vermieden ist. Während über den Ausgang 125 Gierbewegungen gesteuert werden können, wird über den Ausgang 126 das Anstellen des Tragflügels eingestellt. Bekanntlich lässt sich durch das Maß des Anstellens eines Flügels das Verhältnis von Flugwiderstand und Auftrieb optimieren. Über einen weiteren Ausgang 127 kann das Reffen des Drachens 101 eingeleitet werden. Ein Reffen verändert den Auftrieb und Widerstand und kann bei einzelnen Flugmanövern erforderlich sein.

Da der Drachen fest am Zugseil geführt ist, wird er durch die Zugwirkung des Seils in seinem Auftriebsschwerpunkt bezüglich seiner Roll- und Neigungsbewegungen automatisch stabilisiert. Um aber auch hier ein Schwingen auszuschließen wird in entsprechender Weise jeweils ein Lagesignal von einem Rollgeber 119 und einem Neigungsgeber 120 über entsprechende invertierende Hochpassfilter 121 und 122 zum Flugprozessor übermittelt, so dass ruckartige Lageänderungen des Windangriffselements 101 vermieden und kompensiert werden.

Wenn der Drachen sich also in seiner vorgegebenen Position befindet (am Ausgang des Vergleichers 218 erscheint ein diesen Zustand kennzeichnendes Ausgangssignal), so wird der ausgewählte Manövertyp ausgelesen, welche den Drachen dazu veranlasst, ein vorgegebenes zyklisches Flugprogramm auszuführen. Ist dieser Manövertyp übertragen, erfolgt die Steuerung selbsttätig vom Autopiloten des Windangriffselements und die Einheit 200 braucht nicht mehr zu reagieren, sofern der Drachen nicht durch unvorhergesehene Ereignisse seine Sollposition verlässt.

Stimmt die Sollposition des Windangriffselements 101 nicht mit seiner vorgegebenen Position überein, sei es, dass sich die Vorgabeposition, welche aus dem Speicher 212 ausgelesen wird, verändert hat - was auch beim Setzen des Drachens der Fall ist - oder sei es, dass der Drachen im Laufe des Manövrierens seine Position verlassen hat, so verschwindet das Ausgangssignal am Ausgang des Vergleiches 218, und der über das Schaltglied 219 aktivierte Manövertyp des Speichers 220 endet. Am Ausgang des Speichers für den Manövertyp 220 (linker Teil) erscheint das Signal "Null", was vom Autopiloten des Windangriffssystems 100 dahingehend interpretiert wird, dass das zuletzt eingespeicherte Manöver nicht mehr ausgeführt wird. Statt dessen wird die Ist-Position des Drachen, welche aus dem Speicher 213 ausgelesen wird und über GPS ermittelt wurde, mit der Soll-Position aus dem Speicher 212 mittels einer Positionskorrigiereinheit 221 verglichen und ein Manöver ermittelt, welches den Drachen in die Sollposition führt. Die Korrigiereinheit 221 ist wieder als Nachschlagetabelle ausgebildet, wobei die Soll- und die Ist-Position (wieder bezogen auf das Schiff) zu einem gemeinsamen Adressiersignal zusammengefasst werden und die Kennzeichnung eines entsprechenden Korrekturmanövers des Windangriffselements von der Ist-Position A in die Soll-Position B ausgelesen wird. Es ist nämlich zu beachten, dass je nach Start und Zielpunkt (und auch gegebenenfalls abhängig von den Wind- und Wellenbedingungen) unterschiedliche Manöver gewählt werden müssen, um den Drachen zu manövrieren. Mit den angegebenen Maßnahmen können aber beliebige Drachenmanöver ausgewählt und ausgeführt werden.

Spielen Wind- und Seegang bei den auszuführenden Manövern eine Rolle, so können diese Daten vom Speicher 211 durch die Nachschlagetabellenspeicher 212 und 221 "durchgeschleift" werden, so dass sie im Datensatz für die Auswahl eines spezifischen Manövers noch vorhanden sind und ein geeignetes Manöver ausgewählt werden kann. Hierbei geht es allerdings nicht um den Ausgleich einzelner Ereignisse, sondern um generelle Einstellungsrichtlinien, welche beispielsweise beinhalten können, dass bei hohem Seegang der Drachen relativ so geflogen wird, dass die durch die Wellenrichtung auf das Wasserfahrzeug wirkenden Kräfte möglichst kompensiert werden können. So wäre also bei stark krängendem Schiff eine Dracheposition mit Querkomponente und bei stark stampfendem Schiff eine Vorauskomponente zu bevorzugen. Aus diesem Grunde wird ein Ausgangssignal des Blocks 231 zur Erfassung des Seegangs direkt dem Block 211 zugeleitet, um eine Information zuzufügen, welche bei der Auswahl der entsprechenden Drachenposition und Manövrierung im oben beschriebenen Sinne mitwirkt. Eine weitere Funktion dieser Verbindung besteht darin, Teile von Flugmanövern so auszuwählen, dass sie den Beschleunigungen aufgrund des Seegangs entgegenwirken. Hierzu gehört, dass Manöver mit zyklischen Flugbahnen, bei denen unterschiedliche Zugkräfte am Zugseil zu unterschiedlichen Zeiten einwirken, so geflogen werden, dass diese Kräfte phasenversetzt zu den Beschleunigungen auftreten, welche durch den Seegang hervorgerufen werden. Auf diese Weise werden die Schiffsbewegungen insgesamt herabgesetzt. Diese Kompensation bzw. Herabsetzung von Schiffsbewegungen durch unterschiedliche Zugkräfte, welche durch das Manövrieren hervorgerufen werden, stören die übrigen angewandten Verfahren für die Seegangskompensation nicht. Dies hat seinen Grund darin, dass von vornherein reduzierte Schiffsbewegungen weniger Aufwand bei der Reduzierung von deren Auswirkungen auf die Drachenflugbahn erfordern. Wegen der Kompensation der einzelnen Schiffsbewegungen wird auf die Beschreibung des Blocks 231 weiter unten verwiesen.

Für den Positionswechsel wird der rechte Teil des Speichers 220 über ein Schaltglied 222 mit dem aus der Korrigiereinheit 221 ausgelesenen Datensatz adressiert, wobei das Schaltglied 222 vom Ausgangssignal des Vergleichers mittels eines Inverters 223 aktiviert wird, wenn das Schaltglied 219 nicht aktiviert ist, also Soll- und Ist-Position ungleich sind.

Des Weiteren kann auch die Flugstabilität des Windangriffselements für seine Position eine Rolle spielen. Ein am Drachen vorgesehener Mehrrichtungs-Staudruckmesser 111 bildet einerseits einen Windmesser und übermittelt andererseits für die in Flugrichtung gemessene Komponente den Zustand einer zu geringen Anströmung des Drachens durch ein entsprechendes Signal, welches zusammen mit der Erzeugung einer Positionswechselmanövers auch die Winschsteuerung 240 ansteuert, wodurch der Drachen bei dem Positionswechsel beschleunigt wird, so dass die Anströmung wieder heraufgesetzt wird. (Es ist ersichtlich, dass die Winsch auch bei "gewollten" Positionsänderungen aufgrund von Wind- und Wellendaten über den rechten Teil des Speichers 220b mit angesteuert werden kann, damit beispielsweise eine Änderung der Höhe des Windangriffselements herbeigeführt werden kann.)

Für die Ermittlung der wahren Windrichtung und Windgeschwindigkeit weist der Windmesser in unterschiedliche Richtungen gerichtete Staurohre mit Druckdosen auf, welche getrennt ausgewertet werden. Aus den Druckwerten der drei rechtwinklig zueinander gerichteten Druckdosen mit den höchsten Druckwerten lässt sich die Richtung und Geschwindigkeit des Windes in Bezug auf die Ausrichtung des Windmessers 111 bestimmen. Wird das Ausgangssignal des Magnetfeld-Sensors 128, der eine Brückenschaltung aus magnetisch empfindlichen Widerständen enthält und somit die Ermittlung der Richtung der Feldlinien des Erdmagnetfeldes ermöglicht, mit in Betracht gezogen, so kann die Richtung des Windes auf die Nordrichtung bezogen werden und kann somit als Richtung des scheinbaren Windes beim Windangriffselement zu Wasserfahrzeug hin übertragen werden. Dort erfolgt dann gegebenenfalls noch die Korrektur von magnetisch Nord zu geographisch Nord.

Ein zu dem Block 211 gerichteter Pfeil deutet an, dass dabei die normale Navigation des Drachens außer Funktion gesetzt wird. Über ein Oder-Gatter 224, das dem Inverter 223 vorgeschaltet ist, wird auch die übrige normale Manöver-Steuerung unterbunden. (Dies gilt entsprechend auch für die nachfolgend zu beschreibenden Blöcke 228, 229, 230 und 232, welche weitere Sonderfunktionen auslösen. Die zugehörigen Signalverbindungen, sind dort aber aus Gründen der Übersichtlichkeit weggelassen worden.)

Über den Block 228 wird das Notfallmanöver "Notabwurf" durch Auswahl und Start des zugehörigen Manövertyps über den rechten Teil des Manövertypspeichers 220b eingeleitet, der die jeweiligen Programmierungen enthält. Dieses Manöver wird notwendig, wenn vom Windangriffselement für das Schiff durch ungünstige Umstände oder einen Unfall eine große Gefahr ausgeht (z.B. durch Zusammenstoss mit einem Hindernis). Bei diesem Manöver wird das Windangriffselement vollständig vom Schiff getrennt.

Über die Blöcke "Setzen" 229 und "Bergen" 230 werden die entsprechenden Manöver durch Auswahl und Start des betreffenden Manövertyps über den rechten Teil des Manövertypspeichers 220b eingeleitet, der die jeweiligen Programmierungen enthält.

Über einen Block 231 "Schiffsbewegungen" wird über einen entsprechend ausgerichteten Beschleunigungsaufnehmer die in Richtung des Zugseils gerichtete Beschleunigungskomponente ermittelt und nach Integration ein Signal generiert, welches die Schiffsbewegungen in Richtung des Zugseils beschreibt. Dieses Signal wird dem Bord-GPS-Empfänger zugeführt, welcher ein für die Position der Winschsteuerung 240 korrigiertes Positions-Signal liefert, falls der Empfänger bzw. die Antenne nicht selbst in dieser Position montiert ist. Würde dieses GPS-Positionssignal unmittelbar zusammen mit dem über den Empfänger 214 empfangenen GPS-Positions-Signal des Drachensystems 100 ausgewertet und zu Führung des Drachens 101 verwendet, würde dieser in seiner Steuerung den Seegangsbewegungen der Winsch folgen. Da dieser aber seine Manöver in Bezug auf eine gedachte beruhigte Schiffsposition fliegen soll, wird das integrierte Signal des Beschleunigungsaufnehmers in Block 231 zusätzlich dem GPS-Empfänger 215 zugeführt, um (als Störung) von dem Signal subtrahiert zu werden, welches dem Block 216 zur Verarbeitung zugeführt wird, so dass dort das Positionssignal einer "beruhigten Plattform" verarbeitet wird. Auf diese Weise fliegt der Drachen 101 Manöver, die von Seegangsstörungen befreit sind. Es ist nämlich ersichtlich, dass sich hauptsächlich die in Zugseil-Richtung wirkenden Seegangs-Anteile für das Flugobjekt bemerkbar machen, wohingegen quer dazu gerichtete Anteile lediglich zu einer gerade bei langem Zugseil verschwindenden Änderung der Winkel α und β des Flugvektors beitragen und somit vernachlässigbar sind.

Um bei dem dargestellten Ausführungsbeispiel nicht permanent in die Situation zu kommen, bei starkem Seegang ein anstehendes Flugmanöver durch Feststellung einer Abweichung am Differenzblock 218 zu unterbrechen und einen gesteuerten "Flug" in die korrekte Position (in diesem Fall durch Aktivierung der Winsch 240 über den rechten Manöverblock 220b) ausführen zu müssen, besteht vom Block 231 eine Direktverbindung zur Winschsteuerung 240. Diese erhält unmittelbar den Befehl, entsprechend der Feststellung der Seegangsbewegung in Z-ugseilrichtung durch den Block 231 zu fieren und zu holen, so dass die Schiffsbewegungen für den Drachen unmittelbar ausgeglichen sind. Erst, wenn dieser Ausgleich aus irgendeinem Grunde nicht mehr ausreichend sein sollte, wird eine Positionskorrektur durch ein entsprechendes Manöver ausgelöst.

Um auch Manöver manuell auslösen zu können, sind über eine Bedienereingabe 232, welche Teil des Bedieneroberfläche 205 in Figur 2 ist, die entsprechenden Eingabebefehle möglich. Über entsprechende Befehle können in dem linken Teil 220a des Manöverspeichers für manuelle Befehle unter Unterdrückung der übrigen Signalausgabe aus diesem Speicher direkt Steuerbefehle an die Autopiloteneinheit und die Winschsteuerung 240 übermittelt werden. Hierbei handelt es sich um die Funktionen "Links", "Rechts", "Gerade", "Reffen", "Entreffen", "Anstellen (+)", "Anstellen (-)", "Winsch (+)" und "Winsch (-)". Alle Befehle können in ihrer Intensität moduliert werden.

Bei einer in der beschriebenen Ausführung eingeschlossenen Variante erfolgt, ein "vorausschauendes Manövrieren" in der Weise, dass in das System zur Berechnung der aktuellen Position des Windangriffselements fiktive Wind- und Kürsdaten eingegeben werden und die sich dann einstellende Konfiguration zur Information angezeigt wird. Hieraus kann dann die Schiffsführung das vorhersehbare Verhalten des Systems abschätzen und die Navigation entsprechend einstellen. Diese Mehrfachbearbeitung der Daten nach Art der Eventualvorausschau ist in Figur 3 durch Mehrfachwinkel an den Ecken verschiedener Speicherelemente dargestellt, was andeuten soll, dass die Inhalte dieser Speicher unabhängig von der aktuellen Prozesssteuerung mehrfach ausgewertet werden. Hierbei sind also zusätzliche Speichermittel und Vergleichermittel vorgesehen, welche eine Speicherung von vorangehenden Zeitpunkten zugeordneten Signalen mit zeitlich später erscheinenden Signalen in der Weise ermöglichen, dass zeitlich aufeinander folgende Manöverzustände unter Zugrundelegung verschiedener - auch fiktiver - Eingangsdaten vergleichbar sind.

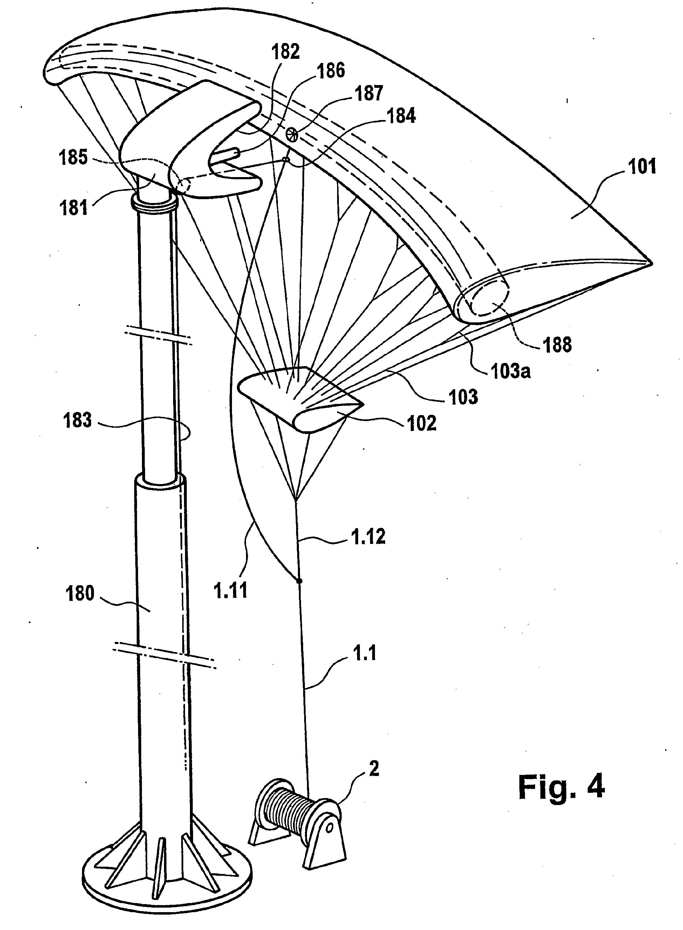

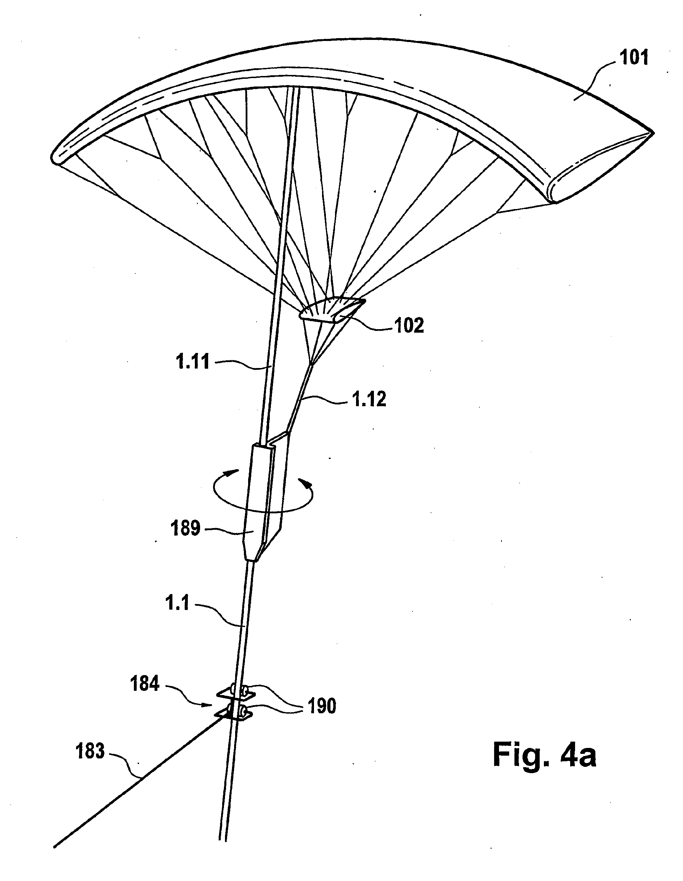

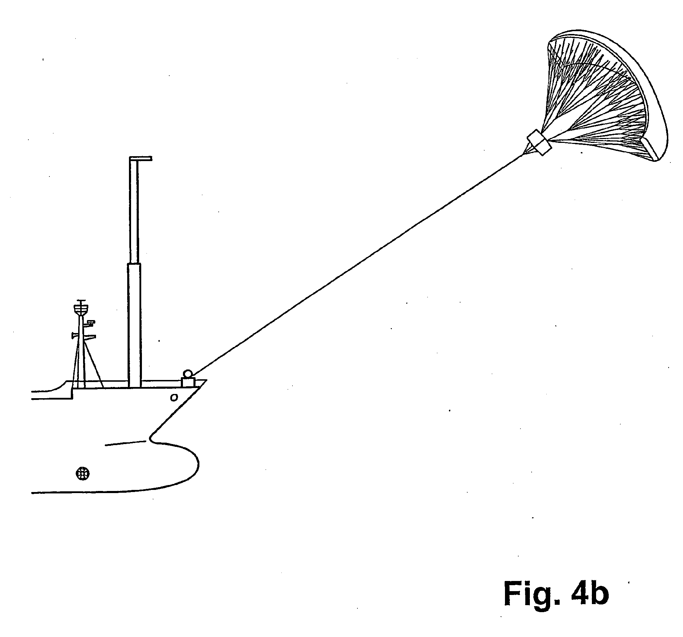

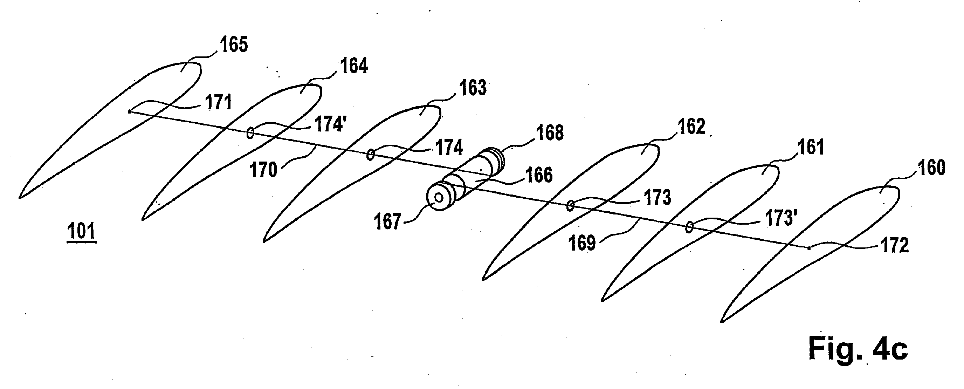

Fig. 4 zeigt eine Andockvorrichtung für das Windangriffselement 101 in perspektivischer Darstellung. Ein teleskopartig ausziehbarer Kran 180, der beispielsweise mit einem nicht dargestellten Hydraulikzylinder ausschiebbar ist, weist an seinem Ende eine Aufnahmevorrichtung 181 zum Andocken auf, die an ihrer Innenseite 182 ein Ausnehmungsprofil aufweist, welches an das Außenprofil des Windangriffselements 101 im Bereich seiner Vorderkante angepasst ist. Die dem Windangriffselement abgewandte Seite der Aufnahmevorrichtung 181 ist strömungsgünstig gestaltet, da sie im Andockfall nach Luv weist. Auch soll sie die Anströmung des Windangriffselements 101 nicht stören.

Innerhalb des Krans 180 ist eine Sorgleine 183 geführt, welche zum Heranziehen des Windangriffselements an den Mast dient, wenn dieser beim Bergen mittels der Winsch bis zur Höhe des ausgefahrenen Krans 180 eingeholt ist. Diese Sorgleine 183 wird mit ihrem freien Ende mit einer - weiter unten im Detail dargestellten Führungsvorrichtung 184, mit der sie auf dem Zugseil 1.1 und dann auf der vor der Gondel 102 abzweigenden Bergeleine 1.11 "reitet", nahe der Winsch 2 auf das Zugseil aufgesetzt und dann geholt bis sie die in Fig. 4 dargestellte Position einnimmt. Die Aufnahmevorrichtung 181 ist auf dem oberen Ende des Krans 180 drehbar gelagert. Im Bereich der Innenseite 182 weist die Aufnahmevorrichtung eine Führung oder Umlenkrolle 185 für die Sorgleine 183 auf, welche exzentrisch in Richtung Lee von der azimutalen Drehachse der Aufnahmevorrichtung gelegen list. Damit wird die Aufnahmevorrichtung 181 durch den Zug der Sorgleine 183 selbsttätig nach Lee zur Aufnahme der Windangriffselements 101 gedreht.

Bei einer nicht dargestellten vorteilhaften Weiterbildung der Erfindung ist die Aufnahmevorrichtung 181 an der Außenseite mit einer Windfahne versehen, so dass sie durch den Winddruck selbsttätig in Richtung des Windangriffselementes weist. Dies ist insbesondere beim Bergen vorteilhaft.

Mit dem weiteren Anziehen der Bergeleine 1.11 gelangt die vordere Profilnase des Windangriffselements 101 näher an die Aufnahmevorrichtung heran. Ein Füllrohr 186, das an der Aufnahmeseite der Aufnahmevorrichtung 181 vorgesehen ist, gerät in eine Ventilöffnung 187, die mit einer aufblasbaren Wulst 188 (gestrichelt dargestellt) im Bereich der Flügelvorderkante in Verbindung steht.

Die Wulst 188 dient zum Entreffen und Aussteifen des Windangriffselements beim Setzen, wenn sie beim Setzen belüftet wird, bevor das Windangriffselement den Startkran verlässt. Beim Bergen bracht das Füllrohr lediglich ein Ventil zu öffnen, um das aussteifende Medium (vorzugsweise Pressluft) herauszulassen. Der Mechanismus ist hier vorzugsweise dem eines Schwimmkörpers eines gewöhnlichen Schlauchboots nachgebildet.

Bei einer nicht dargestellten Weiterbildung ist der Kran 180 im Wesentlichen hohl ausgeführt. Am Fuß des Krans 180 ist ein Gebläse vorgesehen, dass auch im Saugbetrieb arbeiten kann. In die Aufnahmevorrichtung 181 ist ein Luftkanal mit großem Querschnitt eingearbeitet, der auf der Innenseite 182 austritt. Das Windangriffselement 101 weist eine entsprechend der Austrittsöffnung des Luftkanals geformte Öffnung auf, so dass das angedockte Windangriffselement durch Inbetriebnahme des Gebläses be- oder entlüftet (im Saugbetrieb) werden kann. Dadurch ist ein beschleunigtes Setzen und Bergen möglich.

Um Zwischenfälle beim Setzen und Bergen zu verhindern, sind der Kran und die Verkleidungen nach außen verrundet und ohne vorstehende Kanten, Ecken und sonstigen herausragende Teile ausgebildet.

Bei dem in Fig. 4a wiedergegebenen Detail der Andockvorrichtung gemäß Fig. 4 in perspektivischer Darstellung ist eine Seilweiche 189 erkennbar, welche dafür sorgt, dass die Führungsvorrichtung 184, welche mit dem Ende der Sorgleine 183 verbunden ist von ihrer Position auf dem Zugseil 1.1 beim Bergen des Windangriffselements 101 auf die Bergeleine 1.11 gerät, wenn die Sorgleine geholt wird. Die Weiche 189 hat vorzugsweise ein T-förmiges Profil, welches im Anschluss an das Zugseil 1.1 montiert ist und in der Breite seines Querschenkels sich entsprechend der Dicke des Zugseils fortsetzt oder dieses sogar an Breite übertrifft. Der senkrechte Schenkel des T-förmigen Profils ist schmaler gehalten und geht in die Fortsetzung des Zugseils'1.12 über, welche zum Behältnis 102 der Gondel hinführt, an der die Halteleinen 103 des Windangriffselements 101 befestigt sind. Da die Führungsvorrichtung 184 das Seil 1.1 Ω-förmig umgreift, und Führungselemente 190 das Seil somit hintergreifen (vergleichbar mit einer Führung für Gardinen auf einer T-Schiene) gelangt die Führungsvorrichtung sicher vom Seilteil 1.1 zum Seilteil 1.11, obgleich der Weg der Hauptzugkraft in den Seilteil 1.12 übergeleitet wird.

Bei einer alternativen Ausführung, die nicht dargestellt ist, endet die Bergeleine 1.11 in einer Vorrichtung, die das Zugseil 1.1 zumindest teilweise umgreift. Die Vorrichtung ist derart gestaltet, dass sie das Ende der Bergeleine 1.11 an einer definierten Position des Zugseils 1.1 fixiert. Soll das Windangriffselement 101 geborgen werden, so reitet die Führungsvorrichtung 184 der Sorgleine 183 auf dem Zugseil 1.1 empor und stößt an die Vorrichtung, die die Bergeleine 1.11 auf dem Zugseil 1.1 fixiert. Dabei wird ein Kupplungsvorgang ausgelöst, so dass sich die Führungsvorrichtung 184 und die Vorrichtung zur Fixierung der Bergeleine 1.11 miteinander kraft- oder förmschlüssig miteinander verbinden. Gleichzeitig wird die Fixierung der Bergeleine 1.11 am Zugseil 1.1 durch den Kupplungsvorgang gelöst, so dass jetzt die Bergeleine 1.11 mit der Sorgleine 183 verbunden ist, aber keine Verbindung mehr mit dem Zugseil 1.1 besteht.

Fig. 4b zeigt eine Gesamteinsicht der Erfindung.

Bei dem in Fig. 4c wiedergegebenen Detail des Windangriffselements 101 für das Zusammenwirken mit der Andockvorrichtung gemäß Fig. 4 ist eine Reffeinrichtung in perspektivischer Darstellung wiedergegeben. eine schematische Darstellung des mechanischen Prinzips eines Ausführungsbeispiels einer Reffeinrichtung mit elektrischer Winsch und ein Ausführungsbeispiel dargestellten Ausführungsbeispiel sind Textilstege 160 bis 165 wiedergegeben, welche die das Profil bildende Struktur für das Windangriffselement 101 bilden. Die Deckflächen sind in der schematischen Darstellung weggelassen. Ein elektrischer Servomotor 166 ist als Schrittmotor ausgebildet und trägt an den Enden seiner Antriebswelle zwei Wickelscheiben 167 und 168. Sie wickeln gegensinnig zwei Zugleinen 169 und 170 auf, welche an Befestigungspunkten 171 und 172 mit den Stegen 160 bzw. 165 verbunden sind. Wird der Motor 166 aktiviert, so verkürzt er die Zugleinen und zieht die Stege 160 und 165 heran. Bei den übrigen Stege 161 bis 164 sind die Zugleinen 169 und 170 durch Aussparungen 173, 173' und 174, 174' geführt, so dass diese nur über die sich auffaltenden Deckschichten des Flügels geführt werden, wenn dieser gerefft wird. Eine Teilreffung ist durch teilweises Anziehen der Leinen 169 und 170 möglich. Das Entreffen erfolgt durch Aktivieren des Servomotors 166 in Gegenrichtung, wobei das als Gleitschirm ausgebildete Windangriffselement 101 durch seine gewölbte Form und die Zugkraft der Leinen ohne zusätzliche Betätigungskraft wieder den entrefften Zustand einnimmt.

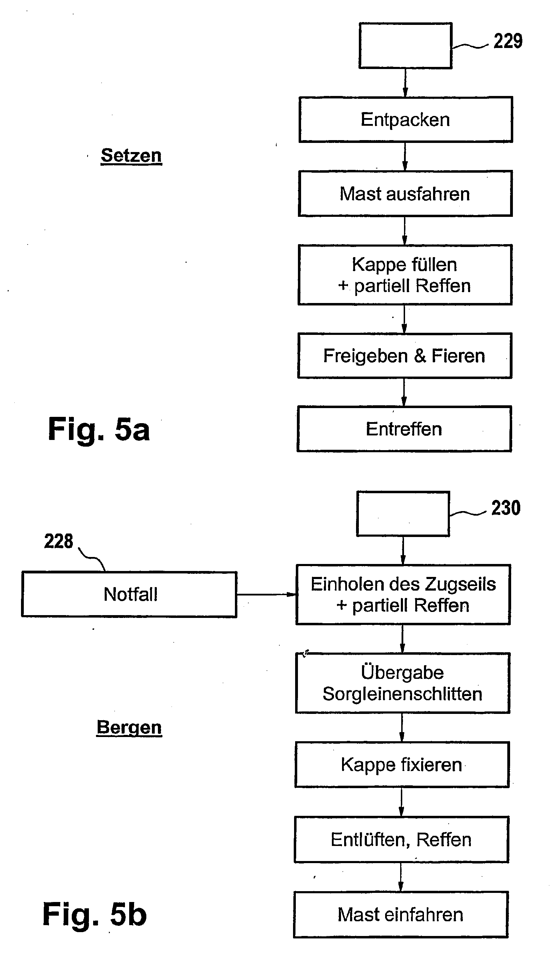

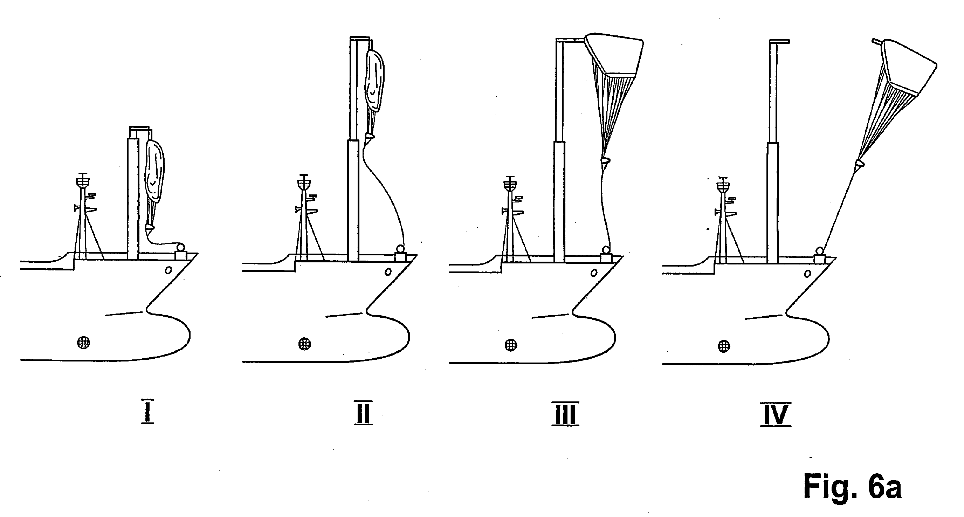

Bei der in Fig. 5a wiedergegebenen Blockdarstellung eines Setzvorgangs gemäß der Erfindung, werden nach entsprechender Auslösung über den Block 229 (Fig. 3) nacheinander die Funktionen I.: Entpacken, II.: Ausfahren des Krans, III.: Füllen der Kappe inklusive partiellem Entreffen, IV.: Entkoppeln der Kappe, Freigeben der Steuergondel und fieren des Zugseils sowie V.: vollständiges Entreffen ausgelöst, was durch die entsprechende Folge von Darstellungen in Fig. 6a illustriert wird (auf die Darstellung der Entreffung wurde aus Gründen der Einfachheit verzichtet). Nachdem über eine Eingabe über Block 229 der entsprechende Befehl gegeben wurde, wird durch eine entsprechende Steuerschaltung sequentiell voll- oder halbautomatisch die entsprechende Folge von Steuerbefehlen ausgelöst, welche über die jeweilige Mechanik die dargestellte Funktion auslösen.

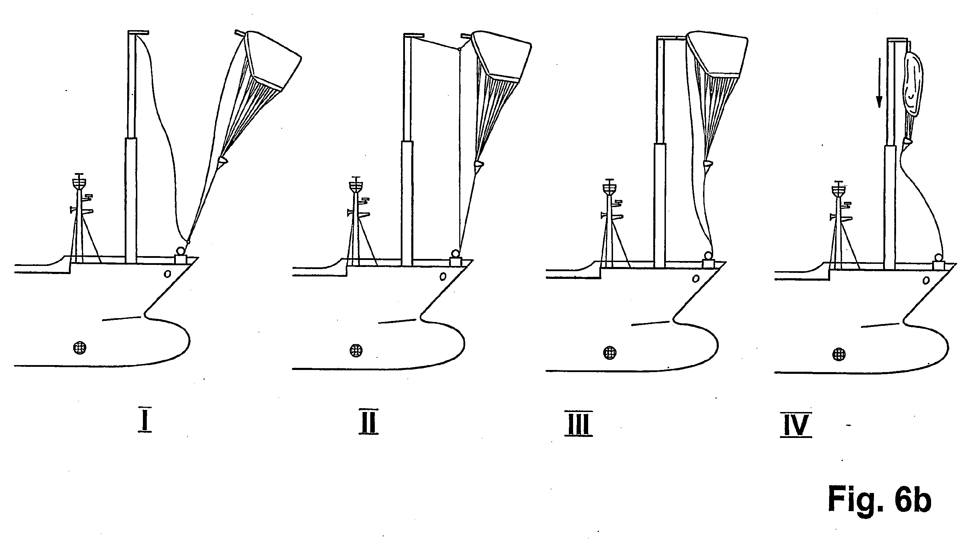

Die in Fig. 5b wiedergegebene Blockdarstellung zeigt einen Bergevorgang gemäß der Erfindung. Es handelt sich der Reihe nach um die Einzelvorgänge: Einholen des Zugseils und partielles Reffen, I. Übergabe, des Sorgleinenschlittens, II. Kappenprofil fixieren, III. Entlüften und Reffen, IV. Kran einfahren und Kappe und nachfolgendes Auftuchen und Verpacken des Windangriffselements wie sie mit den entsprechenden römischen Ziffern auch entsprechend in den Figuren gemäß Fig. 6b dargestellt sind. Ausgelöst wird die Folge von Aktionen entsprechend durch eine Steuerbefehl von Block 230 in Fig. 3. Hierbei kann es auch zur Auslösung eines Bergevorgangs in einer Notsituation kommen, wobei von dem Block 228 ein Signal ausgehen würde. (Bezüglich der Blöcke 228 bis 230 ist der Signalverlauf in den Figuren 5a und 5b vereinfacht dargestellt. Hier sind bei der tatsächlichen Realisierung noch weitere logische Signalverknüpfungen einbezogen, welche das sichere Ausführen der Setz- und Bergefunktionen ohne Kollision mit anderen Manövern gewährleisten).

An Hand von Fig. 6a soll eine schematische Darstellung des Ablaufs eines Setzvorgangs gemäß der Erfindung noch einmal im Einzelnen beschrieben werden: Als erste Phase wird das Ausfahren des Krans vorbereitet und eventuell die Persenning oder ähnliches vom Windangriffselement entfernt. Die Kappe befindet sich schon mit der Profilnase am Masttop. Nach dem vollständigen Ausfahren beginnt das Füllen der Luftkammer (u.u. auch unter Zuhilfenahme des Gebläses) und das partielle Entreffen. Das Windangriffselement kann sich jetzt über die rotierbare Aufnahme frei im Wind ausrichten.

Sobald das Windangriffselement sein flugfähiges Profil angenommen hat, wird er entkoppelt und fällt ca. 15° nach Lee zurück. Spätestens jetzt übernimmt der Autopilot die Flugphase. Anschließend wird das Windangriffselement durch Ausfieren des Zugseils auf die gewünschte Flughöhe gebracht und vollständig entrefft.

Fig. 6b eine schematische Darstellung des Ablaufs eines Bergevorgangs gemäß der Erfindung: Das Windangriffselement wird durch Holen mit der Winsch auf eine Flughöhe gebracht, die radial der Höhe des Krans entspricht. Gleichzeitig wird das Windangriffselement partiell gerefft. Die Sorgleine, die über der (nicht dargestellten) Holepunktrolle in der Nähe der Winsch während der Flugphase am Bug geparkt war, wird eingeholt. Eine Führungsvorrichtung (o.ä.) rutscht am Zugseil von der Holepunktrolle zur Profilnase hoch und zieht die Kappe einschließlich Gondel nach Luv zum Kran. Hier wird auch die Steuergondel am Mast gehalten und die Flugphase endet. Durch diese feste Verbindung zwischen Gondel und Mast ist ein System-Check der Steuerkomponenten möglich. Anschließend wird die Kappe an beiden Seiten gleichmäßig gerefft und der Kran kann abgesenkt werden.

In Fig. 6a bei I und II und Fig. 6b bei IV ist gezeigt, dass das zusammengelegte Windangriffselement schlaff von der Aufnahmevorrichtung herabhängt. Das wäre natürlich nur bei Windstille der Fall. Bei Wind wird sich das zusammengelegte Windangriffselement mehr oder weniger waagerecht ausrichten, so dass es dem Wind nur eine geringe Angriffsfläche bietet und keine große Zugkraft auf den Kran ausübt.

Das Windangriffselement wird entweder zum Kran geführt, der Kran zum Windangriffselement, oder eine Kombination von beiden. Das Windangriffselement wird mittels geeigneter Führungseinrichtungen oder von Sensoren an die Aufnahme- oder Andockvorrichtung herangeführt, damit eine entsprechende Mechanik das Andockmanöver vollenden kann.

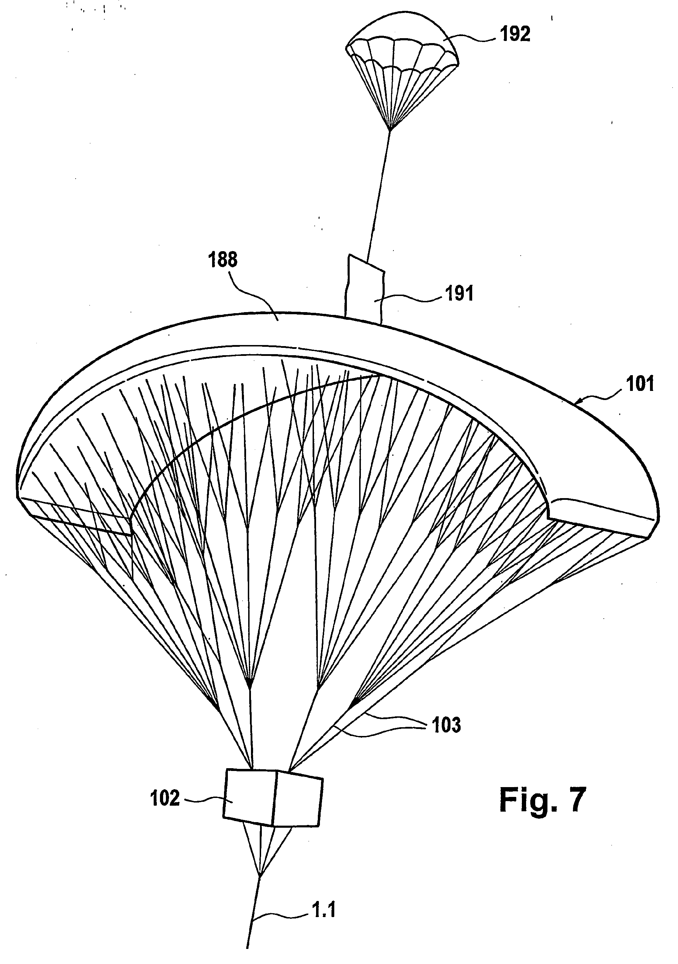

In Fig. 7 ist dargestellt, wie ein beschleunigter Bergevorgangs gemäß der Erfindung erzielt werden kann. Bei der hier dargestellten Ausführungsvariante ist eine (durch Klettbänder o.ä. verschlossene aufreißbare, mit dem aufblasbaren Balg 188 in Verbindung stehende, Öffnung vorgesehen, deren Abdeckung 191 mit einem auslösbaren Fallschirm 192 verbunden ist. Auf einen entsprechenden Steuerbefehl hin wird der Falschschirm 192 während des Bergevorgangs vor dem Andocken an dem Element 181 ausgelöst und reißt die Abdeckung 191 heraus, so dass die unter Überdruck stehende Luft aus dem Balg 188 schnell entweicht.

Auf diese Weise ist auch ein Notreffvorgang durch schnelles Öffnen des das aufblasbare Element abschließenden Verschlussbereichs, der Abdeckung 191 auslösbar. Dabei sind die Reffleinen 169 und 170 mit dem Fallschirm 192 verbunden. Durch den Winddruck im Fallschirm 192 werden diese Reffleinen schnell zusammengezogen.

Die Erfindung ist nicht an die dargestellten Ausführungsbeispiele gebunden. Andere im Bereich der Erfindung liegende Konfigurationen ergeben sich aus Kombinationen von Unteransprüchen, welche sich dem Fachmann aufgrund der vorliegenden Beschreibung erschließen.

## Patentansprüche

1. Setzsystem für ein frei ausfliegendes drachenartiges Windangriffselement (1) bei einem Wasserfahrzeug (4), bei dem das Windangriffselement (1) mit einem Tragflächenprofil über ein Zugseil (1.1) mit dem Fahrzeugkörper (4) verbunden ist, wobei das Windangriffselement (1) aus einer Ruhestellung an Bord des Wasserfahrzeugs (4) in eine erhöhte, von Hindernissen in gleichem oder erhöhtem Niveau freie Startposition führbar ist, **dadurch gekennzeichnet, dass**
eine azimutal schwenkbare Halterung vorgesehen ist, mittels der das Windangriffselement (1) in eine Position bringbar ist, in der es einer ausreichenden Windeinwirkung ausgesetzt ist, wobei eine Andockaufnahmevorrichtung (181) zur lösbaren Verbindung mit dem Andockadapter des Windangriffselements an der dem Wind abgewandten Seite vorgesehen ist, welche durch vorzugsweise selbsttätig eingreifende Haltemittel auch ein Bergen des Windangriffselements (1) ermöglichen.

2. Setzsystem nach Anspruch 1, **dadurch gekennzeichnet, dass** die Startposition in horizontaler und/oder vertikaler Richtung gegenüber dem Ort der Seilführung in gesetztem Zustand des Windangriffselements versetzt angeordnet ist, welcher durch die Winsch (2) gebildet ist oder sich in der Nähe der Winsch (2) befindet.

3. Setzsystem nach Anspruch 1 oder 2, **dadurch gekennzeichnet, dass** bei dem Windangriffselement (1) ein sich in eine Anzahl von Halteseilen auffächerndes Zugseil (1.1) mit dem Fahrzeug verbunden ist, wobei ein den Auffächerungspunkt überbrückendes Verbindungsseil (1.11) vorgesehen ist, welches von der Andockeinrichtung am Windangriffselement (1) zu einem - vom Windangriffselement (1) aus gesehen - jenseits des Auffächerungspunktes gelegenen - Verbindungspunkt zum Hauptteil des Zugseils (1.1) geführt ist, und dass eine Sorgleine (183) oder ein Fall vorgesehen ist, welche von der Andockaufnahmevorrichtung (181) ausgeht und deren freies Ende mindestens im Bereich des Verbindungsseils auf dem Zugseil (1.1) kraftschlüssig verschieblich geführt ist.

4. Setzsystem nach Anspruch 3, **dadurch gekennzeichnet, dass** die Sorgleine (183) mit dem Zugseil (1.1) über eine Seilweiche (189) verbunden ist, welche Mittel aufweist, um eine als Seilrutscher ausgebildete Führungsvorrichtung (184), die mit dem Ende der Sorgleine (183) verbunden ist, von ihrer Position auf dem Zugseil (1.1) beim Bergen des Windangriffselements (101) auf das Verbindungsseil (1.11) zu überführen, während das Windangriffselement (101) über einen weiteren Leinenteil (1.12) mit der Seilweiche verbunden ist.

5. Setzsystem nach einem der Ansprüche 1 bis 4, **dadurch gekennzeichnet, dass** vom Windangriffselement (1) im angedockten Zustand eine minimale Belastung in Vertikalrichtung ausgeübt wird, insbesondere infolge aerodynamischen Auftriebs.

6. Setzsystem nach Anspruch 4, **dadurch gekennzeichnet, dass** die Seilweiche (189) ein im wesentlichen T-förmiges Profil aufweist, welches von der Führungsvorrichtung (184) Ω-förmig umgriffen wird.

7. Setzsystem nach einem der Ansprüche 1 bis 6, **dadurch gekennzeichnet, dass** die azimutal rotierbare Andockaufnahme (181) eine Vorrichtung aufweist, welche die aktive Richtung der Aufnahme (181) selbsttätig nach Lee stellt, insbesondere in Form einer Windfahhe.

8. Setzsystem nach einem der Ansprüche 2 bis 7, **dadurch gekennzeichnet, dass** die Vorrichtung eine exzentrisch an der Andockaufnahme (181) befestigte Umlenkrolle für die Sorgleine (183) oder das Fall aufweist.

9. Setzsystem nach einem der Ansprüche 1 bis 8, **dadurch gekennzeichnet, dass** das Windangriffselement (1) über seine Breitenausdehnung gekrümmt ist.

10. Setzsystem nach einem der Ansprüche 1 bis 9, **dadurch gekennzeichnet, dass** das Einfangen des Windangriffselements (1) über eine Befestigung erfolgt, die eine Stelle bildet, für den sich symmetrisch am Windangriffselement (1) wirkende Windkräfte vertikal und horizontal kompensieren.

11. Setzsystem nach einem der Ansprüche 1 bis 10, **dadurch gekennzeichnet, dass** das Windangriffselement (1) eine Reffeineinrichtung aufweist und dass das Setzen und Bergen des flexibel ausgebildeten Windangriffselements aus einem gerefften Zustand heraus erfolgt.

12. Setzsystem nach einem der Ansprüche 1 bis 11, **dadurch gekennzeichnet, dass** das Windangriffselement (1) einen festen, ungerefften Mittelteil aufweist.

13. Setzsystem nach einem der Ansprüche 11 oder 12, **dadurch gekennzeichnet, dass** der Reffmechanismus Zugbänder (169, 170) aufweist, die vorzugsweise mit einer Winsch (166) betätigbar sind.

14. Setzsystem nach einem der Ansprüche 11 bis 13, **dadurch gekennzeichnet, dass** das Reffen in seitlicher Verlängerung des Tragflügelprofils erfolgt.

15. Setzsystem nach einem der Ansprüche 11 bis 14, **dadurch gekennzeichnet, dass** beim Reffen entstehenden Falten zwischen Bereichen mit festem Profilquerschnitt eingeschlagen werden.

16. Setzsystem nach einem der Ansprüche 1 bis 15, **dadurch gekennzeichnet, dass** ein gleicher Profilquerschnitt im Wesentlichen über die gesamte Tragflügellänge vorgesehen ist.

17. Setzsystem nach einem der Ansprüche 1 bis 16, **dadurch gekennzeichnet, dass** zur Stabilitätserhöhung mindestes ein aufblasbares Element (188) im Bereich der Flügelvorderkante und/oder zwischen den Bereichen mit festem Flügelquerschnitt vorgesehen ist.

18. Setzsystem nach Anspruch 17, **dadurch gekennzeichnet, dass** das aufblasbare Element den ganzen Hohlraum des Windangriffselements einnimmt.

19. Setzsystem nach Anspruch 17 oder 18, **dadurch gekennzeichnet, dass** das aufblasbare Element an der Vorderseite offen und durch Staudruck befüllbar ist.

20. Setzsystem nach Anspruch 17, **dadurch gekennzeichnet, dass** in der Andockaufnahme ein Verbindungselement mit einem Durchtrittsquerschnitt für ein Medium, welches in das oder aus dem aufblasbaren Element gelangt, vorgesehen ist.

21. Setzsystem nach Anspruch 20, **dadurch gekennzeichnet, dass** an oder in der Nähe der Andockaufnahme ein starkes Gebläse zum Befüllen/Entleeren des aufblasbaren Elements vorgesehen ist.

22. Setzsystem nach Anspruch 21, **dadurch gekennzeichnet, dass** ein Mast der Andockaufnahme einen sich im Wesentlichen über seine Länge erstreckenden Hohlraum aufweist, der mit dem Gebläse verbunden ist.

23. Setzsystem nach einem der Ansprüche 11 bis 22, **dadurch gekennzeichnet, dass** ein Reffvorgang bei frei fliegendem Windangriffselement über eine Fernbetätigung oder durch das Ausgangssignal mindestens eines Sensorelements auslösbar ist, wobei bei einem ein aufblasbares Element (188) aufweisenden Windangriffselement gleichzeitig auch der Entlüftungsvorgang auslösbar ist.

24. Setzsystem nach einem der Ansprüche 17 bis 23, **dadurch gekennzeichnet, dass** ein Notreffvorgang durch schnelles Öffnen eines das aufblasbare Element abschließenden Verschlussbereichs auslösbar ist.

25. Setzsystem nach Anspruch 24, **dadurch gekennzeichnet, dass** das schnelle Öffnen bei dem Notreffvorgang mittels eines mit dem schnellen Einziehen des Zugseils auszubringenden Fallschirm (192) erfolgt.

26. Setzsystem nach einem der Ansprüche 1 bis 25, **dadurch gekennzeichnet, dass** die Andockaufnahme (181) am oberen Ende eines Krans (180) angeordnet ist.

27. Setzsystem nach Anspruch 26, **dadurch gekennzeichnet, dass** der Kran (180) teleskopierbar ist, wobei insbesondere Hydraulikzylindern mit benachbarten oder aufeinander folgenden Teleskopsegmenten zum Antrieb verbunden sind.

28. Setzsystem nach Anspruch 26 oder 27, **dadurch gekennzeichnet, dass** der mobile Kran (180) einen mittels eines komprimierten Gases aufblasbaren Körper aufweist oder er daraus besteht.

29. Setzsystem nach Anspruch 28, **dadurch gekennzeichnet, dass** es sich bei dem komprimierten Gas um Druckluft handelt.

30. Setzsystem nach einem der Ansprüche 24 bis 29, **dadurch gekennzeichnet, dass** die azimutal schwenkbaren Halterung ein Anschlusselement für das komprimierte Gas aufweist, das mit dem aufblasbaren Element (188) des Windangriffselements (1) verbindbar ist.

31. Setzsystem nach einem der Ansprüche 1 bis 30, **dadurch gekennzeichnet, dass** bei der Fehlfunktion des Steuergeräts oder eines angeschlossenen, für die Bedienung des Windangriffselements wichtigen Geräts selbsttätig das Bergen des Windangriffselements (1) auslösbar ist.

## Claims

1. Deployment system for a freely flying kite-like element (1) on which wind acts, for a watercraft (4) wherein the element (1) on which wind acts has a wing profile and is connected via a hawser (1.1) to the craft body (4), wherein the element (1) on which wind acts can be moved from a rest position on-board the watercraft (4) to a raised launch position, which is free of obstructions at the same level or at a higher level, **characterized in that**
a holder which can be pivoted in azimuth is provided, by means of which the element (1) on which wind acts can be moved to a position in which it is subject to sufficient wind effect, with a docking receptacle apparatus (181) being provided for detachable connection to the docking adapter of the element on which wind acts on the side facing away from the wind and also allowing the element (1) on which wind acts to be stowed by holding means, which preferably engage automatically.

2. Deployment system according to Claim 1, **characterized in that** the launch position is arranged offset in the horizontal and/or vertical direction with respect to the location of the cable or rope guide when the element on which wind acts is in the deployed state, with the location of the cable guide being formed by the winch (2) or being located in the vicinity of the winch (2).

3. Deployment system according to Claim 1 or 2, **characterized in that**, at the element (1) on which wind acts, a hawser (1.1) which spreads out into a number of holding cables is connected to the craft, with a connecting cable (1.11) being provided, which bridges the spreading point and is passed from the docking device on the element (1) on which wind acts to a connecting point, which - seen from the element (1) on which wind acts - is located beyond the spreading point, to the main part of the hawser (1.1), and **in that** a lifeline (183) or a halyard is provided, which originates from the docking receptacle apparatus (181) and whose free end is guided such that it can move with a force fit on the hawser (1.1), at least in the area of the connecting cable.

4. Deployment system according to Claim 3, **characterized in that** the lifeline (183) is connected to the hawser (1.1) via a cable junction (189) which has means in order to move a guide apparatus (184), which is in the form of a cable slide and is connected to the end of the lifeline (183), from its position on the hawser (1.1) onto the connecting cable (1.11) when the element (101) on which wind acts is being stowed, while the element (101) on which wind acts is connected to the cable junction via a further line part (1.12).

5. Deployment system according to one of Claims 1 to 4, **characterized in that** the element (1) on which wind acts exerts a minimal load in the vertical direction in the docked state, in particular as a result of aerodynamic lift.

6. Deployment system according to Claim 4, **characterized in that** the cable junction (189) has an essentially T-shaped profile, which is surrounded in an Q-shape by the guide apparatus (184).

7. Deployment system according to one of Claims 1 to 6, **characterized in that** the docking receptacle (181), which can rotate in azimuth, has an apparatus which automatically places the active direction of the receptacle (181) on the lee side, in particular in the form of a wind vane.

8. Deployment system according to one of Claims 2 to 7, **characterized in that** the apparatus has a guide roller, which is attached eccentrically to the docking receptacle (181), for the lifeline (183) or the trap.

9. Deployment system according to one of Claims 1 to 8, **characterized in that** the element (1) on which wind acts is curved over its width extent.

10. Deployment system according to one of Claims 1 to 9, **characterized in that** the element (1) on which wind acts is caught via an attachment which forms a point for which wind forces acting symmetrically on the element (1) on which wind acts compensate vertically and horizontally.

11. Deployment system according to one of Claims 1 to 10, **characterized in that** the element (1) on which wind acts has a reefing device, and **in that** the deployment and stowage of the flexible element on which wind acts take place from a reefed state.

12. Deployment system according to one of Claims 1 to 11, **characterized in that** the element (1) on which wind acts has a fixed, unreefed center part.

13. Deployment system according to one of Claims 11 or 12, **characterized in that** the reefing mechanism has tension strips (169, 170) which can preferably be operated by a winch (166).

14. Deployment system according to one of Claims 11 to 13, **characterized in that** the reefing process takes place in side extension of the wing profile.

15. Deployment system according to one of Claims 11 to 14, **characterized in that** folds which are created during the reefing process are wrapped in between areas with a fixed profile cross section.

16. Deployment system according to one of Claims 1 to 15, **characterized in that** an identical profile cross section is provided essentially over the entire wing length.

17. Deployment system according to one of Claims 1 to 16, **characterized in that** at least one inflatable element (188) is provided in the area of the wing leading edge and/or between the areas with a fixed wing cross section, in order to increase stability.

18. Deployment system according to Claim 17, **characterized in that** the inflatable element occupies the entire hollow space of the element on which wind acts.

19. Deployment system according to Claim 17 or 18, **characterized in that** the inflatable element is open at the front and can be filled by ram-air pressure.

20. Deployment system according to Claim 17, **characterized in that** a connecting element having a cross section through which a medium which enters or emerges from the inflatable element can pass is provided in the docking receptacle.

21. Deployment system according to Claim 20, **characterized in that** a powerful fan is provided on or in the vicinity of the docking receptacle, in order to fill/empty the inflatable element.

22. Deployment system according to Claim 21, **characterized in that** a mast of the docking receptacle has a hollow space which extends essentially over its length and is connected to the fan.

23. Deployment system according to one of Claims 11 to 22, **characterized in that** a reefing process can be initiated when the element on which wind acts is flying freely, via a remote control or by means of the output signal from at least one sensor element, wherein the deflating process can also be initiated at the same time for an element on which wind acts and which has an inflatable element (188).

24. Deployment system according to one of Claims 17 to 23, **characterized in that** an emergency reefing process can be initiated by rapid opening of a closure area which closes the inflatable element.

25. Deployment system according to Claim 24, **characterized in that** rapid opening for the emergency reefing process is carried out by means of a parachute (192) which can be deployed as the hawser is pulled in quickly.

26. Deployment system according to one of Claims 1 to 25, **characterized in that** the docking receptacle (181) is arranged at the upper end of a crane (180).

27. Deployment system according to Claim 26, **characterized in that** the crane (180) is telescopic, in particular with hydraulic cylinders being connected to adjacent or successive telescopic segments, for drive purposes.

28. Deployment system according to Claim 26 or 27, **characterized in that** the mobile crane (180) has or comprises a body which can be inflated by means of a compressed gas.

29. Deployment system according to Claim 28, **characterized in that** the compressed gas is compressed air.

30. Deployment system according to one of Claims 24 to 29, **characterized in that** the holder which can pivot in azimuth has a connecting element for the compressed gas, which connecting element can be connected to the inflatable element (188) of the element (1) on which wind acts.

31. Deployment system according to one of Claims 1 to 30, **characterized in that** the stowage of the element (1) on which wind acts can be initiated automatically in the event of a malfunction of the controller or of a connected appliance which is important for control of the element on which wind acts.

## Revendications

1. Système de hissage d'un élément exposé au vent (1) à vol libre, du type cerf-volant, sur un bateau (4), dans lequel l'élément exposé au vent (1) avec un profil de surface portante est relié à la coque du bateau (4) par l'intermédiaire d'un câble de traction (1.1), l'élément exposé au vent (1) pouvant être amené hors d'une position de repos à bord du bateau (4) dans une position de départ plus élevée libre de tout obstacle au même niveau ou à un niveau plus élevé, **caractérisé en ce que**
il est prévu un système de fixation apte à pivoter dans toutes les directions, au moyen duquel l'élément exposé au vent (1) peut être amené dans une position dans laquelle il est exposé à une influence du vent suffisante, sachant qu'il est prévu un logement du système d'arrimage (181) pour la liaison amovible avec l'adaptateur d'arrimage de l'élément exposé au vent sur le côté opposé au vent, lesquels permettent également un cargage de l'élément exposé au vent (1) par l'intermédiaire de moyens de retenue entrant en prise, de préférence, automatiquement.

2. Système de hissage selon la revendication 1, **caractérisé en ce que** la position de départ est décalée dans la direction horizontale et/ou verticale par rapport au lieu de guidage du câble dans la position de hissage de l'élément exposé au vent, lequel est formé par le treuil (2) ou se situe à proximité du treuil (2).

3. Système de hissage selon la revendication 1 ou 2, **caractérisé en ce que** dans l'élément exposé au vent (1), un câble de traction (1.1), étalant en éventail une pluralité de câbles de retenue, est relié au bateau, sachant qu'il est prévu un câble de liaison (1.11), qui couvre le point d'étalement en éventail et qui est guidé depuis le dispositif d'arrimage au niveau de l'élément exposé au vent (1) vers un point de liaison - situé de l'autre côté du point d'étalement en éventail - vu à partir de l'élément exposé au vent (1) - vers la partie principale du câble de traction (1.1), et **en ce qu'**un filin de sécurité (183) ou un cordage, qui part du logement du système d'arrimage (181) et dont l'extrémité libre, au moins dans la zone du câble de liaison, est logée de manière mobile par assemblage à force sur le câble de traction (1.1).

4. Système de hissage selon la revendication 3, **caractérisé en ce que** le filin de sécurité (183) est relié au câble de traction (1.1) par l'intermédiaire d'un séparateur de câble (189), qui comporte des moyens pour transférer un dispositif de guidage (184), réalisé sous la forme d'un glisseur de câble, qui est relié à l'extrémité du filin de sécurité (183), depuis sa position sur le câble de traction (1.1) lors du cargage de l'élément exposé au vent (101) vers le câble de liaison (1.11), alors que l'élément exposé au vent (101) est relié au séparateur de câble par l'intermédiaire d'une autre partie de câble (1.12).

5. Système de hissage selon l'une quelconque des revendications 1 à 4, **caractérisé en ce que** l'élément exposé au vent (1) en position arrimée exerce une sollicitation minimale dans la direction verticale, en particulier à la suite de la poussée ascensionnelle aérodynamique.

6. Système de hissage selon la revendication 4, **caractérisé en ce que** le séparateur de câble (189) possède un profil sensiblement en forme de T qui est enserré en forme d'Ω par le dispositif de guidage (184).

7. Système de hissage selon l'une quelconque des revendications 1 à 6, **caractérisé en ce que** le logement du système d'arrimage (181), apte à tourner dans toutes les directions, comporte un dispositif, en particulier sous la forme d'une pale directrice, qui positionne la direction active du logement (181) automatiquement vers le côté sous le vent.

8. Système de hissage selon l'une quelconque des revendications 2 à 7, **caractérisé en ce que** le dispositif comporte une poulie de renvoi pour le filin de sécurité (183) ou le cordage, laquelle est fixée de manière excentrée sur le logement du système d'arrimage (181).

9. Système de hissage selon l'une quelconque des revendications 1 à 8, **caractérisé en ce que** l'élément exposé au vent (1) est courbé sur sa dimension en largeur.

10. Système de hissage selon l'une quelconque des revendications 1 à 9, **caractérisé en ce que** la récupération de l'élément exposé au vent (1) est effectuée au moyen d'une fixation qui forme un emplacement, pour lequel des forces du vent agissant symétriquement sur l'élément exposé au vent (1) se compensent verticalement et horizontalement.

11. Système de hissage selon l'une quelconque des revendications 1 à 10, **caractérisé en ce que** l'élément exposé au vent (1) comporte un dispositif d'arisage, et **en ce que** le hissage et le cargage de l'élément exposé au vent, réalisé flexible, s'effectuent à partir d'une position arisée.

12. Système de hissage selon l'une quelconque des revendications 1 à 11, **caractérisé en ce que** l'élément exposé au vent (1) comporte une partie centrale fixe, non arisée.

13. Système de hissage selon la revendication 11 ou 12, **caractérisé en ce que** le mécanisme d'arisage comporte des bandes de traction (169, 170) qui peuvent être actionnées de préférence avec un treuil (166).

14. Système de hissage selon l'une quelconque des revendications 11 à 13, **caractérisé en ce que** l'arisage s'effectue dans le prolongement latéral du profil de surface portante.

15. Système de hissage selon l'une quelconque des revendications 11 à 14, **caractérisé en ce que** les plis, qui se forment lors de l'arisage, sont rentrés entre des zones avec une section de profil fixe.

16. Système de hissage selon l'une quelconque des revendications 1 à 15, **caractérisé en ce qu'**il est prévu une même section de profil sensiblement sur toute la longueur de la surface portante.

17. Système de hissage selon l'une quelconque des revendications 1 à 16, **caractérisé en ce que** pour l'augmentation de la stabilité, il est prévu au moins un élément gonflable (188) dans la zone du bord avant de la surface portante et/ou entre les zones avec une section de surface portante fixe.

18. Système de hissage selon la revendication 17, **caractérisé en ce que** l'élément gonflable occupe la totalité de l'espace creux de l'élément exposé au vent.

19. Système de hissage selon la revendication 17 ou 18, **caractérisé en ce que** l'élément gonflable est ouvert sur le côté avant et peut être rempli avec une pression dynamique.

20. Système de hissage selon la revendication 17, **caractérisé en ce que** dans le logement du système d'arrimage, il est prévu un élément d'assemblage avec une section de passage pour un fluide qui est admis dans l'élément gonflable ou est évacué hors de celui-ci.

21. Système de hissage selon la revendication 20, **caractérisé en ce que** sur le logement du système d'arrimage ou à proximité de celui-ci est prévue une soufflante puissante pour remplir ou vider l'élément gonflable.

22. Système de hissage selon la revendication 21, **caractérisé en ce qu'**un mât du logement du système d'arrimage comporte une cavité qui s'étend sensiblement sur toute sa longueur et qui est reliée à la soufflante.

23. Système de hissage selon l'une quelconque des revendications 11 à 22, **caractérisé en ce que**, dans le cas où un élément exposé au vent vole librement, un processus d'arisage peut être déclenché par l'intermédiaire d'une télécommande ou par un signal de sortie d'au moins un élément de détection, sachant que lorsque l'élément exposé au vent comporte un élément gonflable (188), le processus de dégonflage peut être déclenché simultanément.

24. Système de hissage selon l'une quelconque des revendications 17 à 23, **caractérisé en ce qu'**un processus d'arisage d'urgence peut être déclenché par une ouverture rapide d'une zone de fermeture obturant l'élément gonflable.

25. Système de hissage selon la revendication 24, **caractérisé en ce que** l'ouverture rapide pendant le processus d'arisage d'urgence est assurée par un parachute (192) à déployer au moment de la rétraction rapide du câble de traction.

26. Système de hissage selon l'une quelconque des revendications 1 à 25, **caractérisé en ce que** le logement du système d'arrimage (181) est disposé au niveau de l'extrémité supérieure d'un mécanisme de levage (180).

27. Système de hissage selon la revendication 26, **caractérisé en ce que** le mécanisme de levage (180) est télescopique, en particulier des vérins hydrauliques étant reliés à des segments télescopiques adjacents ou successifs en vue de son actionnement.

28. Système de hissage selon la revendication 26 ou 27, **caractérisé en ce que** le mécanisme de levage (180) mobile comporte un corps gonflable au moyen d'un gaz comprimé ou est formé par ledit corps.

29. Système de hissage selon la revendication 28, **caractérisé en ce que** le gaz comprimé est de l'air comprimé.

30. Système de hissage selon l'une quelconque des revendications 24 à 29, **caractérisé en ce que** le système de fixation apte à pivoter dans toutes les directions comporte un élément de raccordement pour le gaz comprimé, qui peut être relié à l'élément gonflable (188) de l'élément exposé au vent (1).

31. Système de hissage selon l'une quelconque des revendications 1 à 30, **caractérisé en ce que** le cargage de l'élément exposé au vent (1) peut être déclenché automatiquement en cas de dysfonctionnement de l'appareil de commande ou d'un appareil raccordé, important pour la commande de l'élément exposé au vent.
